# EUROPEAN PATENT APPLICATION

(11) **EP 4 338 612 A1**
(43) Date of publication of application: **20.03.2024**
(21) Application number: 22807086.8
(22) Date of filing: 28.02.2022
(51) Int. Cl.: A24F 40/40, A24F 40/50

(54) **POWER SOURCE UNIT FOR AEROSOL GENERATION DEVICE**

(30) Priority: 10.05.2021 JP 2021079874
(71) Applicant: Japan Tobacco, Inc., Tokyo, 105-6927 (JP)
(72) Inventor: AOYAMA Tatsunari, Tokyo 130-8603 (JP); KAWANAGO Hiroshi, Tokyo 130-8603 (JP); NAGAHAMA Toru, Tokyo 130-8603 (JP); FUJIKI Takashi, Tokyo 130-8603 (JP); YOSHIDA Ryo, Tokyo 130-8603 (JP)
(74) Representative: Hoffmann Eitle
(86) International application number: PCT/JP2022/008363
(87) International publication number: WO 2022/239379

(57) **Abstract**

A non-combustion-type aspirator (100) comprises a power source BAT, a heater connector Cn to which a heater HTR is connected, a charging IC 2, a receptacle RCP, a power source line PL that connects a power source input terminal VBUS of the receptacle RCP and an input terminal VBUS of the charging IC 2, a power source line protection component (205) provided to the power source line PL, an MCU mounting substrate (161), and a receptacle mounting substrate (162). The charging IC 2 is disposed on the MCU mounting substrate (161), the receptacle RCP is disposed on the receptacle mounting substrate (162), and the power source line protection component (205) is disposed on only the receptacle mounting substrate (162) from among the MCU mounting substrate (161) and the receptacle mounting substrate (162).

## Description

### TECHNICAL FIELD

The present invention relates to a power supply unit for an aerosol generating device.

### BACKGROUND ART

Patent Literatures 1 to 3 describe a power supply unit for an aerosol generating device including a receptacle such as a USB.

In order to safely introduce power supplied from an external power supply via a USB or the like into the device, it is preferable to provide a protection component in order to protect electronic components in the device from noise or the like when the external power supply is disturbed. On the other hand, with higher functionality of aerosol generating devices, a plurality of circuit boards may be provided in the device.

### CITATION LIST

### PATENT LITERATURE

Patent Literature 1: Japanese Patent No. 6633778
Patent Literature 2: CN206865186U
Patent Literature 3: CN104348214A

### SUMMARY OF INVENTION

### TECHNICAL PROBLEM

However, in a case where a plurality of circuit boards are provided in the device, there is room for consideration on how to provide the protection component for the plurality of circuit boards.

The present invention provides a power supply unit for an aerosol generating device in which a protection component is appropriately provided for a plurality of boards.

### SOLUTION TO PROBLEM

A power supply unit for an aerosol generating device according to the present invention includes:
a power supply;
a heater connector connected to a heater configured to heat an aerosol source by consuming power supplied from the power supply;
a charging IC including an input terminal and a charging terminal connected to the power supply, and configured to convert power input to the input terminal and to output power which is converted from the charging terminal;
a receptacle electrically connectable to an external power supply and including a power supply terminal;
a power supply line configured to connect the power supply terminal and the input terminal;
a first protection component provided on the power supply line;
a first board; and
a second board separate from the first board, in which:
   the charging IC is disposed on the first board;
   the receptacle is disposed on the second board; and
   the first protection component is disposed only on the second board of the first board and the second board.

In addition, a power supply unit for an aerosol generating device according to the present invention includes:
a power supply;
a heater connector connected to a heater configured to heat an aerosol source by consuming power supplied from the power supply;
a charging IC including an input terminal and a charging terminal connected to the power supply, and configured to convert power input to the input terminal and to output power which is converted from the charging terminal;
a receptacle electrically connectable to an external power supply and including a power supply terminal;
a power supply line configured to connect the power supply terminal and the input terminal;
a first protection component provided on the power supply line;
a first board; and
a second board separate from the first board, in which:
   the charging IC is disposed on the first board;
   the receptacle is disposed on the second board; and
   the number of the first protection component disposed on the second board is larger than the number of the first protection component disposed on the first board.

### ADVANTAGEOUS EFFECTS OF INVENTION

According to the present invention, a protection component can be appropriately provided for a plurality of boards, and noise can be sufficiently removed, by the protection component, from power supplied from an external power supply before reaching a board on which a charging IC is disposed.

### BRIEF DESCRIPTION OF DRAWINGS

[Fig. 1] Fig. 1 is a perspective view of a non-combustion inhaler.
[Fig. 2] Fig. 2 is a perspective view of the non-combustion inhaler illustrating a state where a rod is mounted.
[Fig. 3] Fig. 3 is another perspective view of the non-combustion inhaler.
[Fig. 4] Fig. 4 is an exploded perspective view of the non-combustion inhaler.
[Fig. 5] Fig. 5 is a perspective view of an internal unit of the non-combustion inhaler.
[Fig. 6] Fig. 6 is an exploded perspective view of the internal unit in Fig. 5.
[Fig. 7] Fig. 7 is a perspective view of the internal unit with a power supply and a chassis removed.
[Fig. 8] Fig. 8 is another perspective view of the internal unit with the power supply and the chassis removed.
[Fig. 9] Fig. 9 is a schematic diagram for illustrating operation modes of the inhaler.
[Fig. 10] Fig. 10 is a diagram illustrating a schematic configuration of an electric circuit of the internal unit.
[Fig. 11] Fig. 11 is a diagram for illustrating an operation of the electric circuit in a sleep mode.
[Fig. 12] Fig. 12 is a diagram for illustrating an operation of the electric circuit in an active mode.
[Fig. 13] Fig. 13 is a diagram for illustrating an operation of the electric circuit in a heating initial setting mode.
[Fig. 14] Fig. 14 is a diagram for illustrating an operation of the electric circuit at the time of heating the heater in a heating mode.
[Fig. 15] Fig. 15 is a diagram for illustrating an operation of the electric circuit at the time of detecting a temperature of the heater in the heating mode.
[Fig. 16] Fig. 16 is a diagram for illustrating an operation of the electric circuit in a charging mode.
[Fig. 17] Fig. 17 is a diagram illustrating a line extending from a receptacle and a protection component for the receptacle.
[Fig. 18] Fig. 18 is a diagram illustrating a main surface of a receptacle-mounted board.
[Fig. 19] Fig. 19 is a diagram illustrating a secondary surface of the receptacle-mounted board.
[Fig. 20] Fig. 20 is a diagram illustrating a main surface of an MCU-mounted board.
[Fig. 21] Fig. 21 is a diagram illustrating a secondary surface of the MCU-mounted board.

### DESCRIPTION OF EMBODIMENTS

Hereinafter, an inhaling system as an embodiment of an aerosol generating device according to the present invention will be described with reference to the drawings. The inhaling system includes a non-combustion inhaler 100 (hereinafter, also simply referred to as "inhaler 100") which is an embodiment of a power supply unit according to the present invention, and a rod 500 heated by the inhaler 100. In the following description, a configuration in which the inhaler 100 accommodates a heating unit in an undetachable manner will be described as an example. However, the heating unit may be attachable to and detachable from the inhaler 100. For example, the rod 500 and the heating unit may be integrated and attachable to and detachable from the inhaler 100. That is, the power supply unit for the aerosol generating device may not include the heating unit as a component. The term "undetachable" refers to an aspect in which detachment cannot be performed as long as in an assumed application. Alternatively, an induction heating coil provided in the inhaler 100 and a susceptor built in the rod 500 may cooperate to constitute the heating unit.

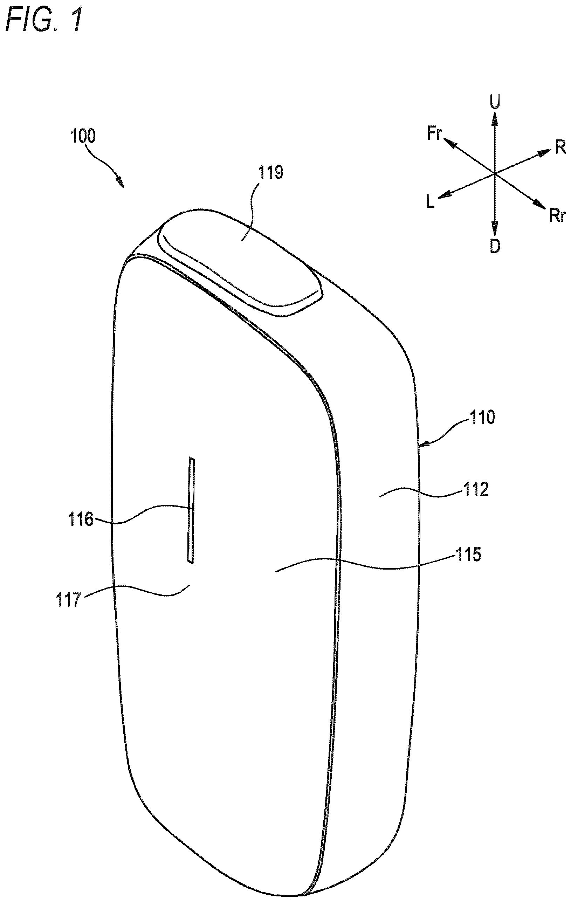

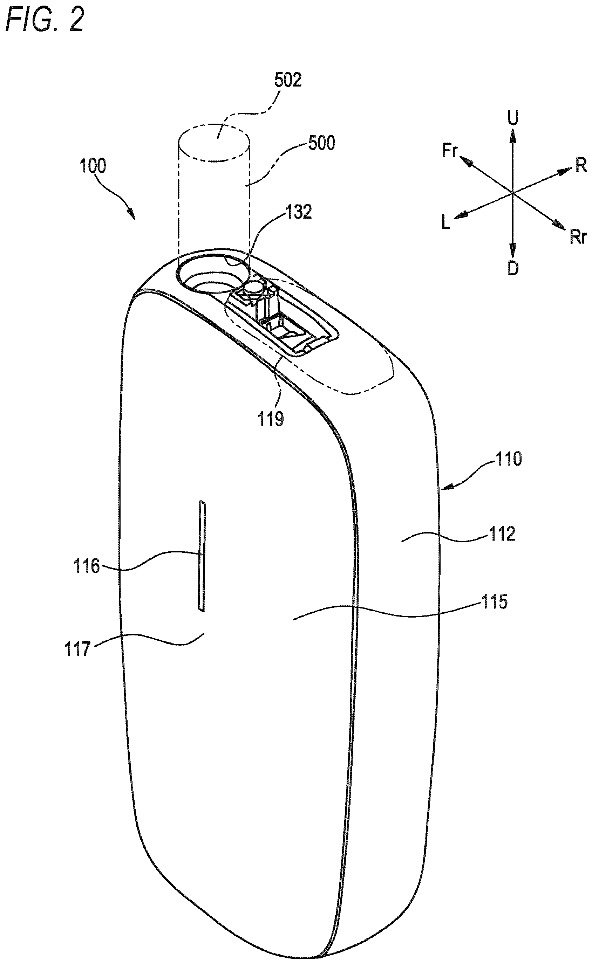

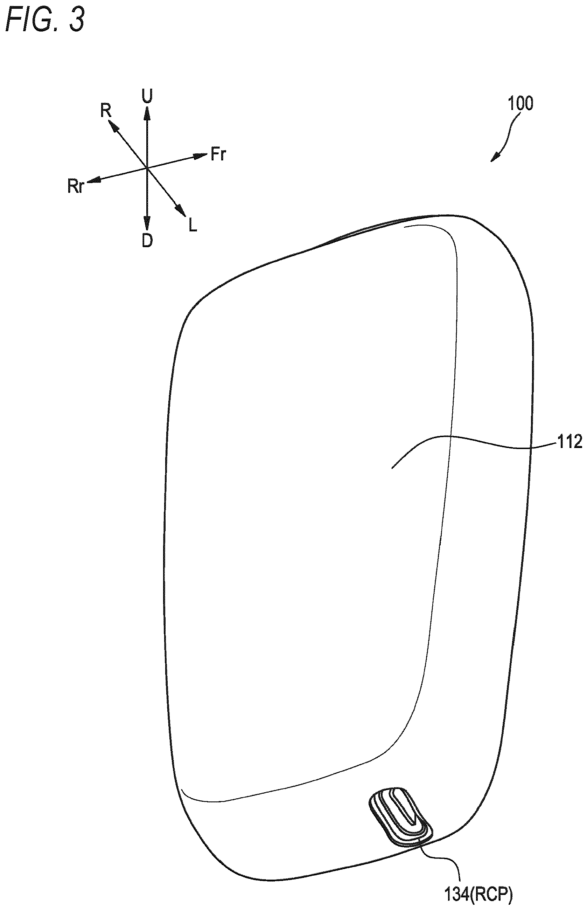

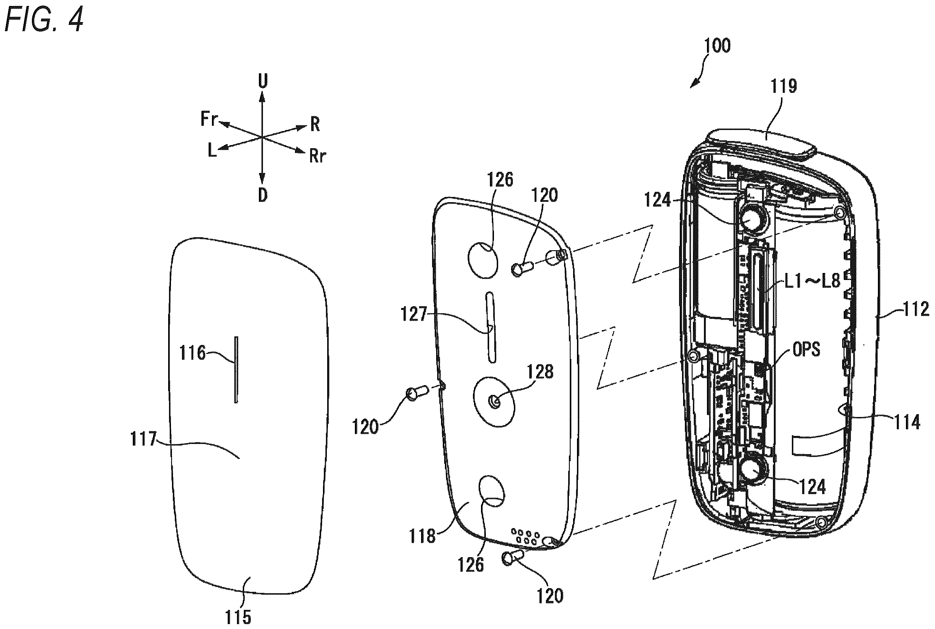

Fig. 1 is a perspective view illustrating an overall configuration of the inhaler 100. Fig. 2 is a perspective view of the inhaler 100 illustrating a state where the rod 500 is mounted. Fig. 3 is another perspective view of the inhaler 100. Fig. 4 is an exploded perspective view of the inhaler 100. In addition, in the following description, for convenience, an orthogonal coordinate system in a three-dimensional space in which three directions orthogonal to one another are defined as a front-rear direction, a left-right direction, and an up-down direction will be described. In the drawings, a front side is denoted by Fr, a rear side is denoted by Rr, a right side is denoted by R, a left side is denoted by L, an upper side is denoted by U, and a lower side is denoted by D.

The inhaler 100 generates an aerosol containing a flavor by heating the rod 500 which is elongated and substantially columnar (see Fig. 2) as an example of a flavor component generating base material having a filler containing an aerosol source and a flavor source.

### <Flavor Component Generating Base Material (Rod)>

The rod 500 includes a filler containing an aerosol source which is heated at a predetermined temperature to generate aerosol.

The type of the aerosol source is not particularly limited, and an extract substance from various natural products and/or a constituent component thereof can be selected according to a purpose. The aerosol source may be a solid, or may be a liquid such as a polyhydric alcohol, which is, for example, glycerin or propylene glycol, and water. The aerosol source may contain a flavor source such as a cigarette raw material which releases a flavor component by being heated or an extract derived from the cigarette raw material. The gas to which the flavor component is added is not limited to the aerosol, and for example, invisible steam may be generated.

The filler of the rod 500 may contain cut tobacco as the flavor source. A material of the cut tobacco is not particularly limited, and known materials such as a lamina and a midrib can be used. The filler may contain one type or two or more types of fragrances. A type of the fragrance is not particularly limited, but is preferably menthol from the viewpoint of imparting good taste. The flavor source may contain a plant other than tobacco (for example, mint, kampo, hearb, or the like). The rod 500 may not contain a flavor source depending on the purpose.

### <Overall Configuration of Non-combustion Inhaler>

Next, the overall configuration of the inhaler 100 will be described with reference to Figs. 1 to 4.

The inhaler 100 includes a substantially rectangular case 110 having a front surface, a rear surface, a left surface, a right surface, an upper surface, and a lower surface. The case 110 includes a bottomed tubular case main body 112 in which the front surface, the rear surface, the upper surface, the lower surface, and the right surface are integrally formed, an outer panel 115 and an inner panel 118 that seal an opening portion 114 (see Fig. 4) of the case main body 112 and constitute a left surface, and a slider 119.

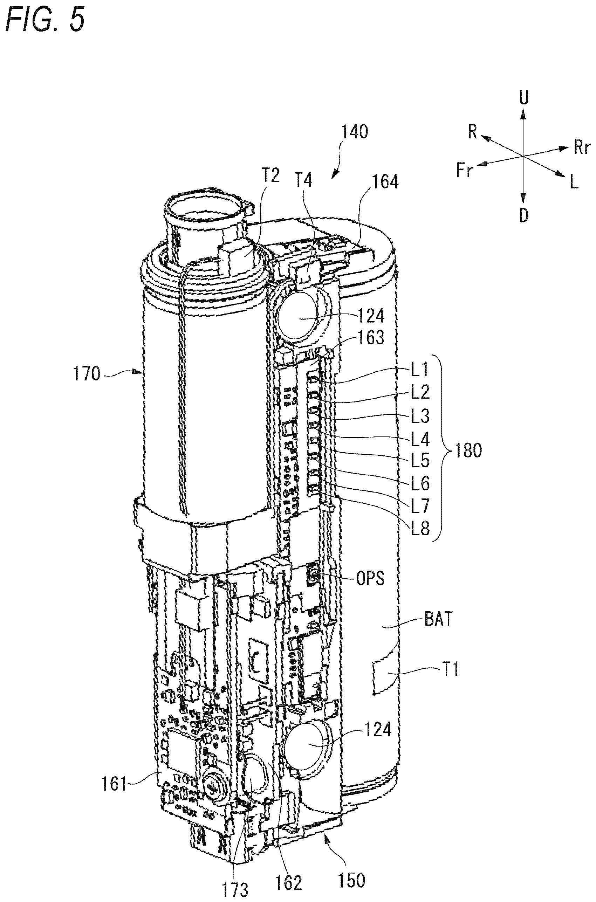

The inner panel 118 is fixed to the case main body 112 by bolts 120. The outer panel 115 is fixed to the case main body 112 by magnets 124 held by a chassis 150 (see Fig. 5) to be described later accommodated in the case main body 112, so as to cover an outer surface of the inner panel 118. The outer panel 115 is fixed by the magnets 124, so that a user may replace the outer panel 115 as desired.

The inner panel 118 is provided with two through holes 126 through which the magnets 124 pass. The inner panel 118 is further provided with a vertically long hole 127 and a circular round hole 128 between the two through holes 126 disposed vertically. The long hole 127 is used to transmit light emitted from eight light emitting diodes (LEDs) L1 to L8 built in the case main body 112. A button-type operation switch OPS built in the case main body 112 passes through the round hole 128. Accordingly, the user can detect the light emitted from the eight LEDs L1 to L8 through a LED window 116 of the outer panel 115. In addition, the user can press down the operation switch OPS via a pressing portion 117 of the outer panel 115.

As illustrated in Fig. 2, an opening 132 into which the rod 500 may be inserted is provided in the upper surface of the case main body 112. The slider 119 is coupled to the case main body 112 between a position where the opening 132 is closed (see Fig. 1) and a position where the opening 132 is opened (see Fig. 2), so as to be movable in the front-rear direction. It should be noted that in Fig. 2, in order to facilitate understanding, the slider 119 is made transparent, and only an outer shape of the slider 119 is indicated by a two-dot chain line.

The operation switch OPS is used to perform various operations of the inhaler 100. For example, the user operates the operation switch OPS via the pressing portion 117 in a state where the rod 500 is inserted into the opening 132 and mounted as illustrated in Fig. 2. Accordingly, the rod 500 is heated by the heating unit 170 (see Fig. 5) without combustion. In a case where the rod 500 is heated, aerosol is generated from the aerosol source contained in the rod 500, and the flavor of the flavor source contained in the rod 500 is added to the aerosol. The user can inhale the aerosol containing the flavor by holding in the mouth an inhaling port 502 of the rod 500 protruding from the opening 132 to perform inhaling.

As illustrated in Fig. 3, a charging terminal 134 that is electrically connected to an external power supply such as an outlet or a mobile battery and receives supply of power is provided on the lower surface of the case main body 112. In the present embodiment, the charging terminal 134 is a universal serial bus (USB) Type-C receptacle, but is not limited thereto. The charging terminal 134 is hereinafter also referred to as a receptacle RCP.

The charging terminal 134 may include, for example, a power receiving coil, and may receive power transmitted from the external power supply in a non-contact manner. A method of wireless power transfer in this case may be an electromagnetic induction type, a magnetic resonance type, or a combination of the electromagnetic induction type and the magnetic resonance type. As another example, the charging terminal 134 may be connectable to various USB terminals or the like, and may include the above-described power receiving coil.

A configuration of the inhaler 100 illustrated in Figs. 1 to 4 is merely an example. The inhaler 100 can be configured in various forms in which the rod 500 is held and applied with an action such as heating to generate a gas to which a flavor component is added from the rod 500, and a user can inhale the generated gas.

### <Internal Configuration of Non-combustion Inhaler>

An internal unit 140 of the inhaler 100 will be described with reference to Figs. 5 to 8.

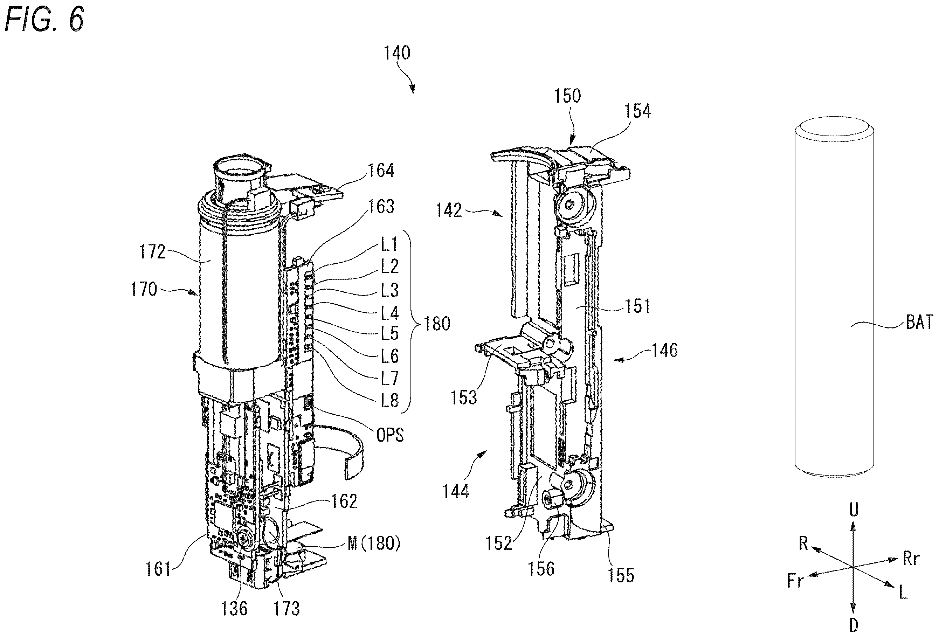

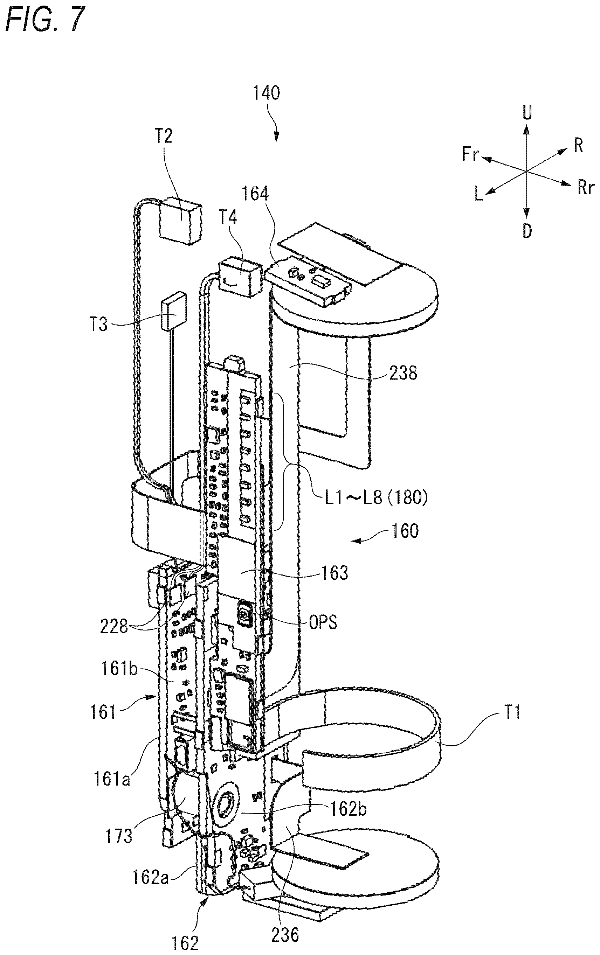

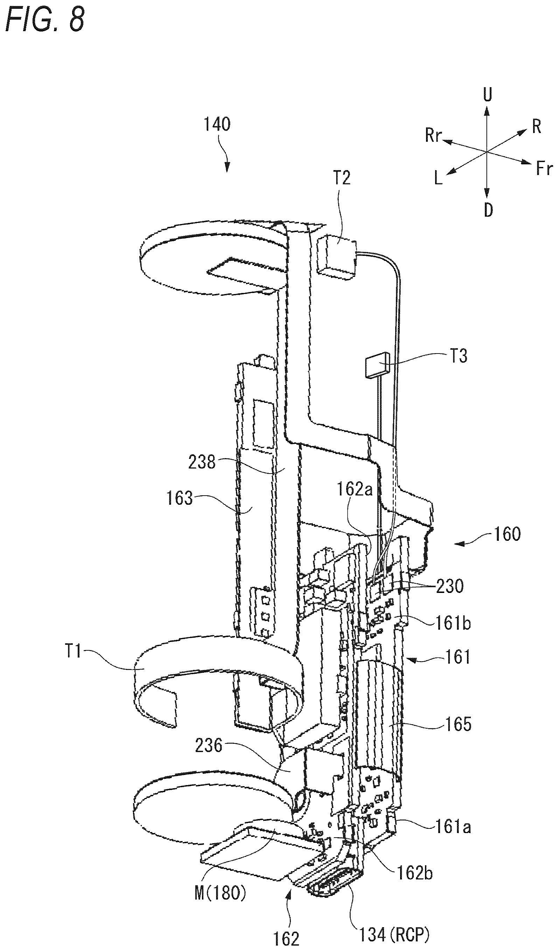

Fig. 5 is a perspective view of the internal unit 140 of the inhaler 100. Fig. 6 is an exploded perspective view of the internal unit 140 in Fig. 5. Fig. 7 is a perspective view of the internal unit 140 from which a power supply BAT and the chassis 150 are removed. Fig. 8 is another perspective view of the internal unit 140 from which the power supply BAT and the chassis 150 are removed.

The internal unit 140 accommodated in an internal space of the case 110 includes the chassis 150, the power supply BAT, a circuit unit 160, a heating unit 170, a notification unit 180, and various sensors.

The chassis 150 includes a plate-shaped chassis main body 151 that is disposed substantially in a center of the internal space of the case 110 in the front-rear direction and that extends in the up-down direction and the front-rear direction, a plate-shaped front-rear dividing wall 152 that is disposed substantially in the center of the internal space of the case 110 in the front-rear direction and that extends in the up-down direction and the left-right direction, a plate-shaped up-down dividing wall 153 that extends forward from substantially a center of the front-rear dividing wall 152 in the up-down direction, a plate-shaped chassis upper wall 154 that extends rearward from upper edge portions of the front-rear dividing wall 152 and the chassis main body 151, and a plate-shaped chassis lower wall 155 that extends rearward from lower edge portions of the front-rear dividing wall 152 and the chassis main body 151. A left surface of the chassis main body 151 is covered with the inner panel 118 and the outer panel 115 of the case 110 described above.

By the chassis 150, a heating unit accommodation region 142 is defined and formed in an upper front portion of the internal space of the case 110, a board accommodation region 144 is defined and formed in a lower front portion thereof, and a power supply accommodation space 146 is defined and formed in a rear portion thereof over the up-down direction.

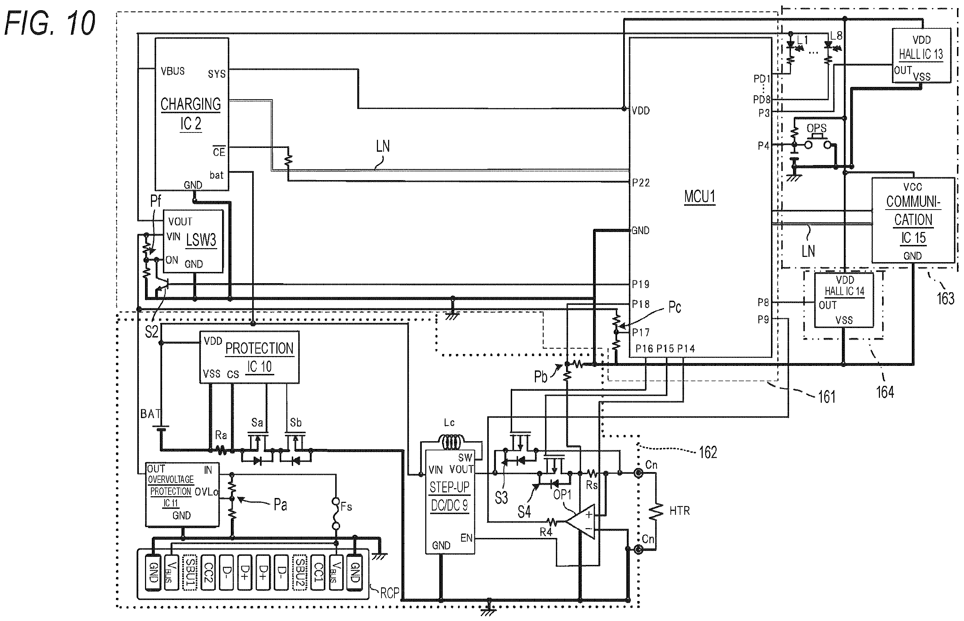

The heating unit 170 accommodated in the heating unit accommodation region 142 is constituted by a plurality of tubular members, and the tubular members are concentrically disposed to form a tubular body as a whole. The heating unit 170 includes a rod accommodation portion 172 capable of accommodating a part of the rod 500 therein, and a heater HTR (see Figs. 10 to 16) that heats the rod 500 from an outer periphery or a center. It is preferable that a surface of the rod accommodation portion 172 and the heater HTR are thermally insulated by forming the rod accommodation portion 172 with a heat insulating material or providing a heat insulating material inside the rod accommodation portion 172. The heater HTR may be an element capable of heating the rod 500. The heater HTR is, for example, a heating element. Examples of the heating element include a heating resistor, a ceramic heater, and an induction-heating-type heater. As the heater HTR, for example, a heater having a positive temperature coefficient (PTC) characteristic in which a resistance value increases with an increase in temperature is preferably used. Alternatively, a heater HTR having a negative temperature coefficient (NTC) characteristic in which the resistance value decreases with an increase in temperature may be used. The heating unit 170 has a function of defining a flow path of air supplied to the rod 500 and a function of heating the rod 500. The case 110 is formed with a vent hole (not illustrated) for allowing air to flow in so that air can flow into the heating unit 170.

The power supply BAT accommodated in the power supply accommodation space 146 is a rechargeable secondary battery, an electric double layer capacitor, or the like, and is preferably a lithium ion secondary battery. An electrolyte of the power supply BAT may be constituted by one or a combination of a gel electrolyte, an electrolytic solution, a solid electrolyte, and an ionic liquid.

The notification unit 180 notifies various types of information such as a state of charge (SOC) indicating a charging state of the power supply BAT, a preheating time at the time of inhaling, and an inhaling available period. The notification unit 180 according to the present embodiment includes the eight LEDs L1 to L8 and a vibration motor M. The notification unit 180 may be constituted by a light emitting element such as the LEDs L1 to L8, a vibration element such as the vibration motor M, or a sound output element. The notification unit 180 may be a combination of two or more elements among a light emitting element, a vibration element, and a sound output element.

The various sensors include an intake sensor that detects a puff operation (inhaling operation) of the user, a power supply temperature sensor that detects a temperature of the power supply BAT, a heater temperature sensor that detects a temperature of the heater HTR, a case temperature sensor that detects a temperature of the case 110, a cover position sensor that detects a position of the slider 119, a panel detection sensor that detects attachment and detachment of the outer panel 115, and the like.

The intake sensor mainly includes, for example, a thermistor T2 disposed in the vicinity of the opening 132. The power supply temperature sensor mainly includes, for example, a thermistor T1 disposed in the vicinity of the power supply BAT. The heater temperature sensor mainly includes, for example, a thermistor T3 disposed in the vicinity of the heater HTR. As described above, the rod accommodation portion 172 is preferably thermally insulated from the heater HTR. In this case, the thermistor T3 is preferably in contact with or close to the heater HTR inside the rod accommodation portion 172. In a case where the heater HTR has the PTC characteristic or the NTC characteristic, the heater HTR may be used for the heater temperature sensor. The case temperature sensor mainly includes, for example, a thermistor T4 disposed in the vicinity of the left surface of the case 110. The cover position sensor mainly includes a Hall IC 14 (see Figs. 10 to 16) including a Hall element disposed in the vicinity of the slider 119. The panel detection sensor mainly includes a Hall IC 13 (see Figs. 10 to 16) including a Hall element disposed in the vicinity of an inner surface of the inner panel 118.

The circuit unit 160 includes four circuit boards, a plurality of integrate circuits (ICs), and a plurality of elements. The four circuit boards include an MCU-mounted board 161 to be described later on which a micro controller unit (MCU) 1 and a charging IC 2 are mainly disposed, a receptacle-mounted board 162 on which the charging terminal 134 is mainly disposed, an LED-mounted board 163 on which the operation switch OPS, the LEDs L1 to L8, and a communication IC 15 to be described later are disposed, and a Hall IC-mounted board 164 on which the Hall IC 14 to be described later including a Hall element constituting the cover position sensor is disposed.

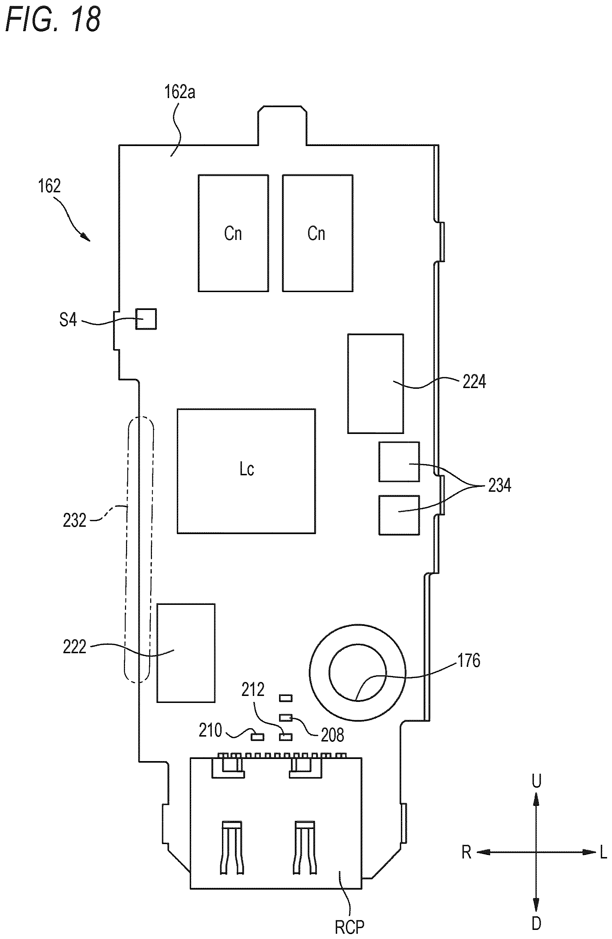

The MCU-mounted board 161 and the receptacle-mounted board 162 are disposed in parallel with each other in the board accommodation region 144. Specifically, the MCU-mounted board 161 and the receptacle-mounted board 162 are disposed such that element disposition surfaces thereof extend in the left-right direction and the up-down direction, and the MCU-mounted board 161 is disposed in front of the receptacle-mounted board 162. The MCU-mounted board 161 and the receptacle-mounted board 162 are provided with opening portions 175 and 176 (see Figs. 18 to 21), respectively. The MCU-mounted board 161 and the receptacle-mounted board 162 are fastened, by a bolt 136, to a board fixing portion 156 of the front-rear dividing wall 152 in a state where a cylindrical spacer 173 is interposed between peripheral portions of the opening portions 175 and 176. That is, the spacer 173 is a fixing member that fixes positions of the MCU-mounted board 161 and the receptacle-mounted board 162 inside the case 110, and mechanically connects the MCU-mounted board 161 and the receptacle-mounted board 162. Accordingly, the MCU-mounted board 161 and the receptacle-mounted board 162 come into contact with each other, and it is possible to prevent the generating of a short-circuit current therebetween. In addition, the spacer 173 has conductivity, and grounds of the MCU-mounted board 161 and the receptacle-mounted board 162 are connected via the spacer 173. As a result, ground potentials of the MCU-mounted board 161 and the receptacle-mounted board 162 can be equalized, and supply of charging power and operating power between the MCU-mounted board 161 and the receptacle-mounted board 162 and communication therebetween can be stabilized.

For convenience, assuming that the surfaces of the MCU-mounted board 161 and the receptacle-mounted board 162 facing the front are main surfaces 161a and 162a, respectively, and surfaces opposite to the main surfaces 161a and 162a are secondary surfaces 161b and 162b, respectively, the secondary surface 161b of the MCU-mounted board 161 and the main surface 162a of the receptacle-mounted board 162 face each other with a predetermined gap therebetween. The main surface 161a of the MCU-mounted board 161 faces the front surface of the case 110, and the secondary surface 162b of the receptacle-mounted board 162 faces the front-rear dividing wall 152 of the chassis 150. The MCU-mounted board 161 and the receptacle-mounted board 162 are electrically connected via a flexible wiring board 165. Elements and ICs mounted on the MCU-mounted board 161 and the receptacle-mounted board 162 will be described later.

The LED-mounted board 163 is disposed on a left side surface of the chassis main body 151 and between the two magnets 124 disposed vertically. An element disposition surface of the LED-mounted board 163 is disposed along the up-down direction and the front-rear direction. In other words, element disposition surfaces of the MCU-mounted board 161 and the receptacle-mounted board 162 are orthogonal to the element disposition surface of the LED-mounted board 163. In this way, the element disposition surfaces of the MCU-mounted board 161 and the receptacle-mounted board 162 and the element disposition surface of the LED-mounted board 163 are not limited to being orthogonal to one another, and preferably intersect with one another (not parallel with one another). The vibration motor M constituting the notification unit 180 together with the LEDs L1 to L8 is fixed to a lower surface of the chassis lower wall 155 and is electrically connected to the MCU-mounted board 161.

The Hall IC-mounted board 164 is disposed on an upper surface of the chassis upper wall 154.

### <Operation Modes of Inhaler>

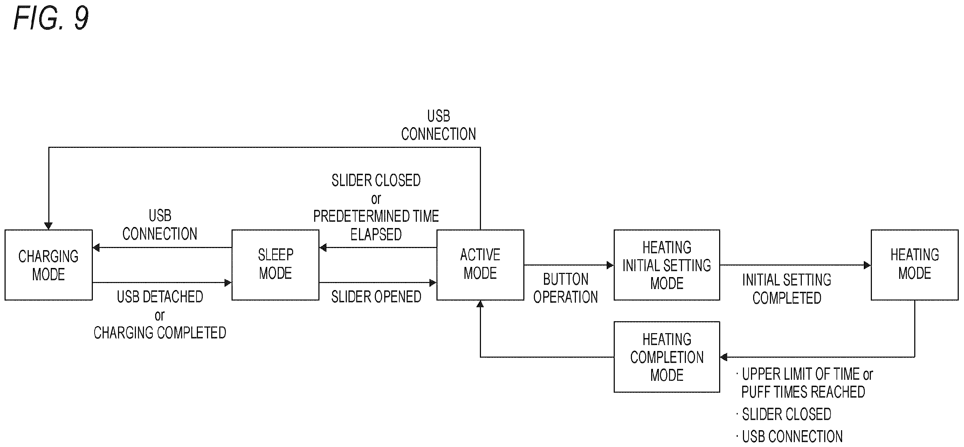

Fig. 9 is a schematic diagram for illustrating operation modes of the inhaler 100. As illustrated in Fig. 9, the operation modes of the inhaler 100 include a charging mode, a sleep mode, an active mode, a heating initial setting mode, a heating mode, and a heating completion mode.

The sleep mode is a mode in which supply of power to electronic components mainly required for heating control of the heater HTR is stopped to save power.

The active mode is a mode in which most of the functions excluding the heating control of the heater HTR are enabled. The inhaler 100 switches the operation mode to the active mode in a case where the slider 119 is opened in a state of operating in the sleep mode. The inhaler 100 switches the operation mode to the sleep mode in a case where the slider 119 is closed or a non-operation time of the operation switch OPS reaches a predetermined time in a state of operating in the active mode.

The heating initial setting mode is a mode for performing initial setting of control parameters and the like for starting the heating control of the heater HTR. The inhaler 100 switches the operation mode to the heating initial setting mode in a case where the operation of the operation switch OPS is detected in a state of operating in the active mode, and switches the operation mode to the heating mode in a case where the initial setting is completed.

The heating mode is a mode in which the heating control of the heater HTR (heating control for aerosol generating and heating control for temperature detection) is executed. The inhaler 100 starts the heating control of the heater HTR in a case where the operation mode is switched to the heating mode.

The heating completion mode is a mode in which a completion process (storage process of heating history or the like) of the heating control of the heater HTR is executed. The inhaler 100 switches the operation mode to the heating completion mode in a case where an energization time to the heater HTR or the number of times of inhaling by the user reaches an upper limit or the slider 119 is closed in a state of operating in the heating mode, and switches the operation mode to the active mode in a case where the completion process is completed. The inhaler 100 switches the operation mode to the heating completion mode in a case where a USB connection is established in a state of operating in the heating mode, and switches the operation mode to the charging mode in a case where the completion process is completed. As illustrated in Fig. 9, in this case, the operation mode may be switched to the active mode before the operation mode is switched to the charging mode. In other words, the inhaler 100 may switch the operation mode in the order of the heating completion mode, the active mode, and the charging mode in a case where the USB connection is established in a state of operating in the heating mode.

The charging mode is a mode in which the power supply BAT is charged by power supplied from the external power supply connected to the receptacle RCP. The inhaler 100 switches the operation mode to the charging mode in a case where an external power supply is connected (USB connected) to the receptacle RCP in a state of operating in the sleep mode or the active mode. The inhaler 100 switches the operation mode to the sleep mode in a case where the charging of the power supply BAT is completed or the connection between the receptacle RCP and the external power supply is released in a state of operating in the charging mode.

### <Outline of Circuit of Internal Unit>

Fig. 10 is a diagram illustrating a schematic configuration of an electric circuit of the internal unit 140. In Fig. 10, only main elements and ICs are illustrated.

A wiring indicated by a thick solid line in Fig. 10 is a wiring having the same potential as a reference potential (ground potential) of the internal unit 140 (wiring connected to a ground provided in the internal unit 140), and this wiring is hereinafter referred to as a ground line. In Fig. 10, an electronic component in which a plurality of circuit elements are formed into a chip is indicated by a rectangle, and reference numerals of various terminals are described inside the rectangle. A power supply terminal VCC and a power supply terminal VDD mounted on the chip each indicate a power supply terminal on a high potential side. A power supply terminal VSS and a ground terminal GND mounted on the chip each indicate a power supply terminal on a low potential side (reference potential side). In the electronic component formed into a chip, a difference between a potential of the power supply terminal on the high potential side and a potential of the power supply terminal on the low potential side becomes a power supply voltage. The electronic component formed into a chip executes various functions using the power supply voltage.

The MCU-mounted board 161 is provided with, as main electronic components, the MCU 1 that integrally controls the overall inhaler 100, the charging IC 2 that performs charging control of the power supply BAT, a load switch (hereinafter, LSW) 3 configured by combining a capacitor, a resistor, a transistor, and the like, and a voltage divider circuit Pc for detecting USB connection.

The ground terminal GND of each of the charging IC 2 and the LSW 3 is connected to the ground line.

The LED-mounted board 163 is provided with, as main electronic components, the Hall IC 13 including the Hall element constituting the panel detection sensor, the LEDs L1 to L8, the operation switch OPS, and the communication IC 15. The communication IC 15 is a communication module for communicating with an electronic device such as a smartphone. Each of the power supply terminal VSS of the Hall IC 13 and the ground terminal GND of the communication IC 15 is connected to the ground line. The communication IC 15 and the MCU 1 can communicate with each other via a communication line LN. One end of the operation switch OPS is connected to the ground line, and the other end of the operation switch OPS is connected to a terminal P4 of the MCU 1.

The receptacle-mounted board 162 is provided with, as main electronic components, a power supply connector electrically connected to the power supply BAT (described as the power supply BAT connected to the power supply connector in the drawing), the step-up DC/DC converter 9 (described as the step-up DC/DC 9 in the drawing), a protection IC 10, an overvoltage protection IC 11, the receptacle RCP, switches S3 and S4 constituted by a MOSFET, the operational amplifier OP1, and a pair of heater connectors Cn (positive electrode side and negative electrode side) electrically connected to the heater HTR.

The two ground terminals GND of the receptacle RCP, the ground terminal GND of the step-up DC/DC converter 9, the power supply terminal VSS of the protection IC 10, the ground terminal GND of the overvoltage protection IC 11, and a negative power supply terminal of the operational amplifier OP1 are each connected to the ground line.

The Hall IC-mounted board 164 is provided with the Hall IC 14 including the Hall element constituting the cover position sensor. The power supply terminal VSS of the Hall IC 14 is connected to the ground line. An output terminal OUT of the Hall IC 14 is connected to a terminal P8 of the MCU 1. The MCU 1 detects opening and closing of the slider 119 based on a signal input to the terminal P8.

### <Details of Circuit of Internal Unit>

A connection relation among the electronic components will be described below with reference to Fig. 10.

Two power supply input terminals V_{BUS} of the receptacle RCP are connected to an input terminal IN of the overvoltage protection IC 11 via a protection element to be described later such as a fuse Fs. In a case where a USB plug is connected to the receptacle RCP and a USB cable including the USB plug is connected to an external power supply, a USB voltage V_{USB} is supplied to the two power supply input terminals V_{BUS} of the receptacle RCP.

One end of a voltage divider circuit Pa including a series circuit of two resistors is connected to the input terminal IN of the overvoltage protection IC 11. The other end of the voltage divider circuit Pa is connected to the ground line. A connection point of the two resistors constituting the voltage divider circuit Pa is connected to a voltage detection terminal OVLo of the overvoltage protection IC 11. In a state where a voltage input to the voltage detection terminal OVLo is less than a threshold, the overvoltage protection IC 11 outputs the voltage input to the input terminal IN from the output terminal OUT. In a case where the voltage input to the voltage detection terminal OVLo is equal to or higher than a threshold (overvoltage), the overvoltage protection IC 11 stops the voltage output from the output terminal OUT (cuts off an electrical connection between the LSW 3 and the receptacle RCP) to protect the electronic components downstream of the overvoltage protection IC 11. The output terminal OUT of the overvoltage protection IC 11 is connected to an input terminal VIN of the LSW 3 and one end of the voltage divider circuit Pc (series circuit of two resistors) connected to the MCU 1. The other end of the voltage divider circuit Pc is connected to the ground line. A connection point of the two resistors constituting the voltage divider circuit Pc is connected to a terminal P17 of the MCU 1.

One end of a voltage divider circuit Pf including a series circuit of two resistors is connected to the input terminal VIN of the LSW 3. The other end of the voltage divider circuit Pf is connected to the ground line. A connection point of the two resistors constituting the voltage divider circuit Pf is connected to a control terminal ON of the LSW 3. A collector terminal of a bipolar transistor S2 is connected to the control terminal ON of the LSW 3. An emitter terminal of the bipolar transistor S2 is connected to the ground line. A base terminal of the bipolar transistor S2 is connected to a terminal P19 of the MCU 1. The LSW 3 outputs a voltage input to the input terminal VIN from an output terminal VOUT in a case where a signal input to the control terminal ON becomes a high level. The output terminal VOUT of the LSW 3 is connected to an input terminal VBUS of the charging IC 2 and an anode of each of the LEDs L1 to L8.

The MCU 1 turns on the bipolar transistor S2 while the USB connection is not established. Accordingly, since the control terminal ON of the LSW 3 is connected to the ground line via the bipolar transistor S2, a low-level signal is input to the control terminal ON of the LSW 3.

The bipolar transistor S2 connected to the LSW 3 is turned off by the MCU 1 in a case where the USB connection is established. By turning off the bipolar transistor S2, the USB voltage V_{USB} divided by the voltage divider circuit Pf is input to the control terminal ON of the LSW 3. Therefore, in a case where the USB connection is established and the bipolar transistor S2 is turned off, a high-level signal is input to the control terminal ON of the LSW 3. Accordingly, the LSW 3 outputs, from the output terminal VOUT, the USB voltage V_{USB} supplied from the USB cable. Even when the USB connection is established in a state where the bipolar transistor S2 is not turned off, the control terminal ON of the LSW 3 is connected to the ground line via the bipolar transistor S2. Therefore, it should be noted that a low-level signal continues to be input to the control terminal ON of the LSW 3 unless the MCU 1 turns off the bipolar transistor S2.

A positive electrode terminal of the power supply BAT is connected to the power supply terminal VDD of the protection IC 10, an input terminal VIN of the step-up DC/DC converter 9, and a charging terminal bat of the charging IC 2. Therefore, the power supply voltage V_{BAT} of the power supply BAT is supplied to the protection IC 10, the charging IC 2, and the step-up DC/DC converter 9. A resistor Ra, a switch Sa constituted by a MOSFET, and a switch Sb constituted by a MOSFET are connected in series to a negative electrode terminal of the power supply BAT in this order. A current detection terminal CS of the protection IC 10 is connected to a connection point between the resistor Ra and the switch Sa. Each of control terminals of the switch Sa and the switch Sb is connected to the protection IC 10.

The protection IC 10 acquires a current value flowing through the resistor Ra during charging and discharging of the power supply BAT from the voltage input to the current detection terminal CS, and in a case where the current value becomes excessively large (in a case of overcurrent), performs opening and closing control of the switch Sa and the switch Sb to stop charging or discharging of the power supply BAT, thereby protecting the power supply BAT. More specifically, in a case where an excessively large current value is acquired at the time of charging the power supply BAT, the protection IC 10 turns off the switch Sb to stop the charging of the power supply BAT. In a case where an excessively large current value is acquired at the time of discharging the power supply BAT, the protection IC 10 turns off the switch Sa to stop the discharging of the power supply BAT. In addition, in a case where a voltage value of the power supply BAT becomes abnormal based on the voltage input to the power supply terminal VDD (in a case of overcharge or overvoltage), the protection IC 10 performs opening and closing control of the switch Sa and the switch Sb to stop charging or discharging of the power supply BAT, thereby protecting the power supply BAT. More specifically, in a case where the overcharge of the power supply BAT is detected, the protection IC 10 turns off the switch Sb to stop the charging of the power supply BAT. In a case where overdischarge of the power supply BAT is detected, the protection IC 10 turns off the switch Sa to stop the discharging of the power supply BAT.

One end of a reactor Lc is connected to a switching terminal SW of the step-up DC/DC converter 9. The other end of the reactor Lc is connected to the input terminal VIN of the step-up DC/DC converter 9. The step-up DC/DC converter 9 performs ON/OFF control of a built-in transistor connected to the switching terminal SW, thereby stepping up an input voltage and outputting the stepped-up voltage from an output terminal VOUT thereof. The input terminal VIN of the step-up DC/DC converter 9 constitutes a power supply terminal of the step-up DC/DC converter 9 on a high potential side. The step-up DC/DC converter 9 performs a step-up operation in a case where a signal input to an enable terminal EN is at a high level. In the USB-connected state, the signal input to the enable terminal EN of the step-up DC/DC converter 9 may be controlled to a low level by the MCU 1. Alternatively, in the USB-connected state, the MCU 1 may not control the signal input to the enable terminal EN of the step-up DC/DC converter 9 to make a potential of the enable terminal EN unstable.

A source terminal of the switch S4 constituted by a P-channel MOSFET is connected to the output terminal VOUT of the step-up DC/DC converter 9. A gate terminal of the switch S4 is connected to a terminal P15 of the MCU 1. One end of a resistor Rs is connected to a drain terminal of the switch S4. The other end of the resistor Rs is connected to the heater connector Cn on the positive electrode side connected to one end of the heater HTR. A voltage divider circuit Pb including two resistors is connected to a connection point between the switch S4 and the resistor Rs. A connection point of the two resistors constituting the voltage divider circuit Pb is connected to a terminal P18 of the MCU 1. A connection point between the switch S4 and the resistor Rs is further connected to a positive power supply terminal of the operational amplifier OP1 .

A connection line between the output terminal VOUT of the step-up DC/DC converter 9 and the source terminal of the switch S4 is connected to a source terminal of the switch S3 constituted by a P-channel MOSFET. A gate terminal of the switch S3 is connected to the terminal P16 of the MCU 1. A drain terminal of the switch S3 is connected to a connection line between the resistor Rs and the heater connector Cn on the positive electrode side. In this way, a circuit including the switch S3 and a circuit including the switch S4 and the resistor Rs are connected in parallel between the output terminal VOUT of the step-up DC/DC converter 9 and the positive electrode side of the heater connector Cn. The circuit including the switch S3 does not include a resistor, and thus is a circuit having a lower resistance than the circuit including the switch S4 and the resistor Rs.

A terminal P14 of the MCU 1 is connected to the enable terminal EN of the step-up DC/DC converter 9.

A non-inverting input terminal of the operational amplifier OP1 is connected to the connection line between the resistor Rs and the heater connector Cn on the positive electrode side. An inverting input terminal of the operational amplifier OP1 is connected to the ground line and the heater connector Cn on the negative electrode side connected to the other end of the heater HTR. One end of a resistor R4 is connected to an output terminal of the operational amplifier OP1. The other end of the resistor R4 is connected to a terminal P9 of the MCU 1.

The input terminal VBUS of the charging IC 2 is connected to an anode of each of the LEDs L1 to L8. Cathodes of the LEDs L1 to L8 are connected to control terminals PD1 to PD8 of the MCU 1 via resistors for current limitation, respectively. That is, the LEDs L1 to L8 are connected in parallel with the input terminal VBUS. The LEDs L1 to L8 are configured to be able to be operated by the USB voltage V_{USB} supplied from the USB cable connected to the receptacle RCP and a voltage supplied from the power supply BAT via the charging IC 2. Transistors (switching elements) connected to the control terminal PD1 to the control terminal PD8 and the ground terminal GND are built in the MCU 1. The MCU 1 turns on the transistor connected to the control terminal PD1 to energize the LED L1 and turn on the LED L1. The MCU 1 turns off the transistor connected to the control terminal PD1 to turn off the LED L1. By switching ON and OFF of the transistor connected to the control terminal PD1 at a high speed, the luminance and the light emission pattern of the LED L1 can be dynamically controlled. Similarly, the LEDs L2 to L8 are controlled to be turned on and turned off by the MCU 1.

The charging IC 2 has a charging function of charging the power supply BAT based on the USB voltage V_{USB} input to the input terminal VBUS. The charging IC 2 acquires a charging current or a charging voltage of the power supply BAT from a terminal or wiring (not illustrated), and performs charging control of the power supply BAT (control on supply of power from the charging terminal bat to the power supply BAT) based on the charging current or the charging voltage.

The charging IC 2 further includes a V_{BAT} power path function and an OTG function. The V_{BAT} power path function is a function of outputting, from an output terminal SYS, a system power supply voltage VccO which is substantially equal to the power supply voltage V_{BAT} input to the charging terminal bat. The OTG function is a function of outputting a system power supply voltage Vcc4 obtained by stepping up the power supply voltage V_{BAT} input to the charging terminal bat from the input terminal VBUS. ON/OFF of the OTG function of the charging IC 2 is controlled by the MCU 1 through serial communication using the communication line LN. In the OTG function, the power supply voltage V_{BAT} input to the charging terminal bat may be output as it is from the input terminal VBUS. In this case, the power supply voltage V_{BAT} is substantially equal to the system power supply voltage Vcc4. It should be noted that a plurality of signal lines such as a data line for data transmission and a clock line for synchronization are required to perform serial communication, but only one signal line is illustrated in Figs. 10 to 16 for simplification.

The output terminal SYS of the charging IC 2 is connected to the power supply terminal VDD of the MCU 1, the power supply terminal VDD of the Hall IC 13, the power supply terminal VCC of the communication IC 15, the power supply terminal VDD of the Hall IC 14, and a series circuit (series circuit of a resistor and a capacitor) connected to the operation switch OPS. A charge enable terminal CE( ) of the charging IC 2 is connected to a terminal P22 of the MCU 1 via a resistor. In order to stabilize the voltage supplied to these power supply terminals, a voltage regulator may be connected to the output terminal SYS of the charging IC 2.

An output terminal OUT of the Hall IC 13 is connected to a terminal P3 of the MCU 1. In a case where the outer panel 115 is detached, a low-level signal is output from the output terminal OUT of the Hall IC 13. The MCU 1 determines whether the outer panel 115 is attached based on the signal input to the terminal P3.

The LED-mounted board 163 is provided with the series circuit (series circuit of a resistor and a capacitor) connected to the operation switch OPS. The series circuit is connected to a power supply line that connects the output terminal SYS of the charging IC 2, the power supply terminal VDD of the MCU 1, the power supply terminal VDD of the Hall IC 13, the power supply terminal VDD of the Hall IC 14, and the power supply terminal VCC of the communication IC 15. A connection point between the resistor and the capacitor of the series circuit is connected to the terminal P4 of the MCU 1 and the operation switch OPS. In a state where the operation switch OPS is not pressed, the operation switch OPS is not conducted, and the signal input to the terminal P4 of the MCU 1 becomes a high level due to the voltage output from the output terminal SYS of the charging IC 2. In a case where the operation switch OPS is pressed and the operation switch OPS is brought into a conductive state, the signal input to the terminal P4 of the MCU 1 becomes a low level because of connection to the ground line. The MCU 1 detects the operation of the operation switch OPS based on the signal input to the terminal P4.

### <Operation in Each Operation Mode of Inhaler>

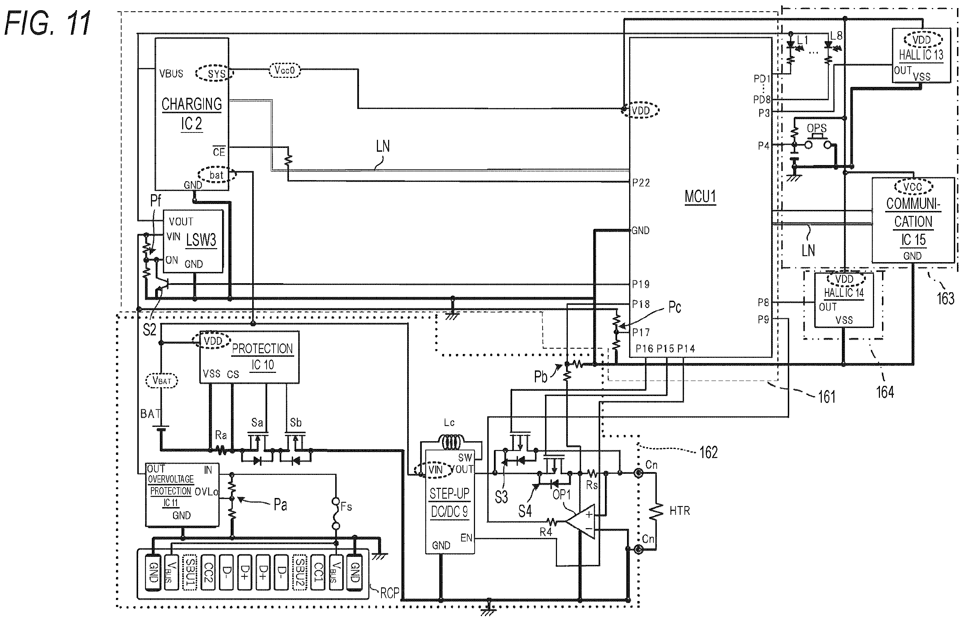

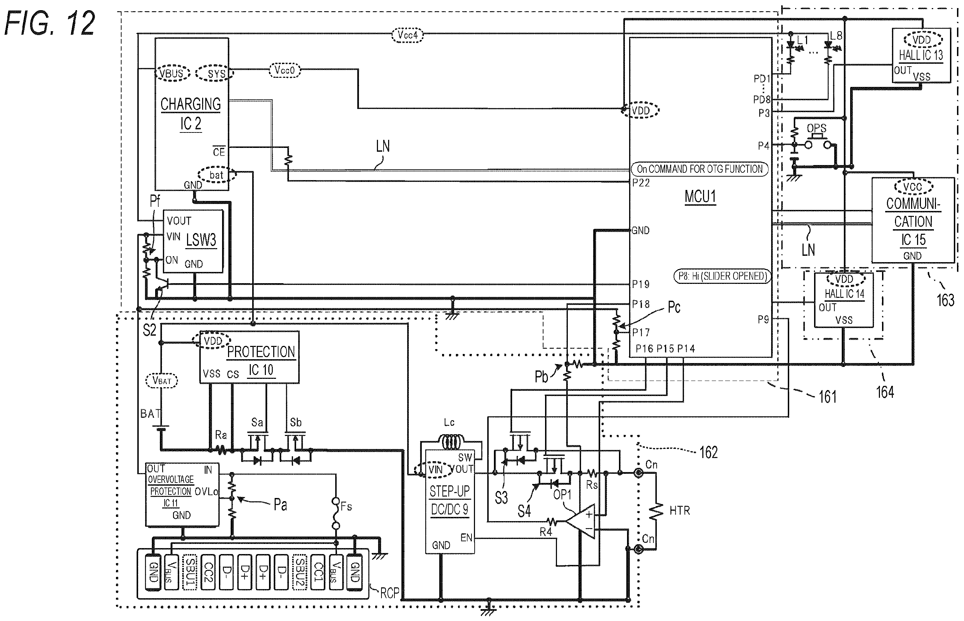

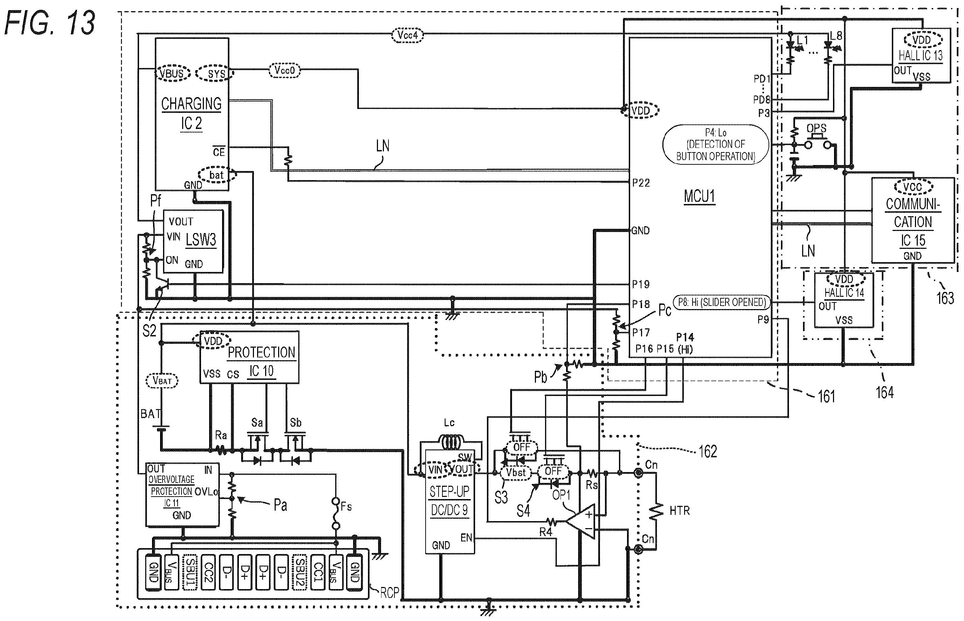

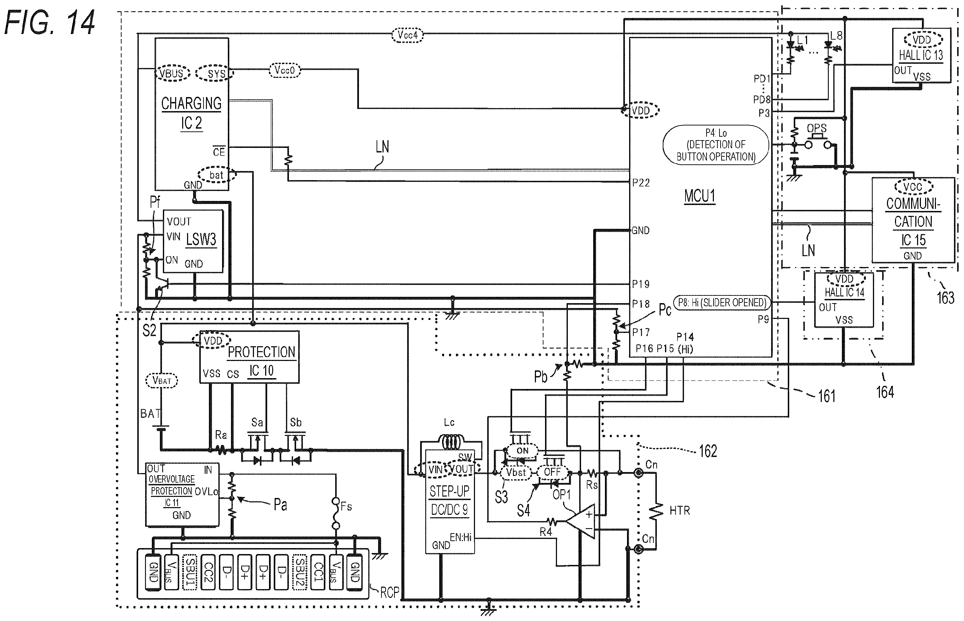

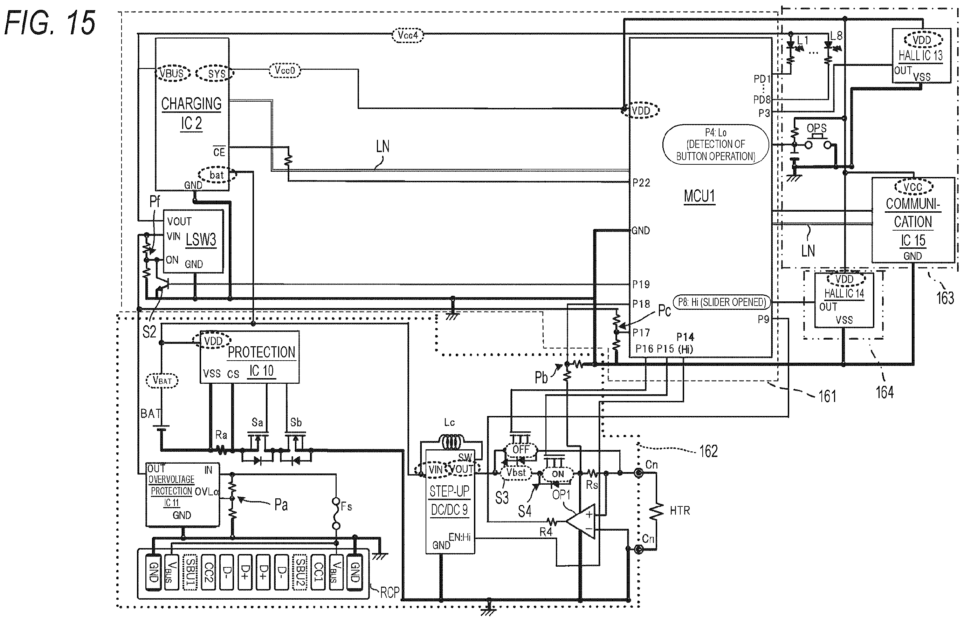

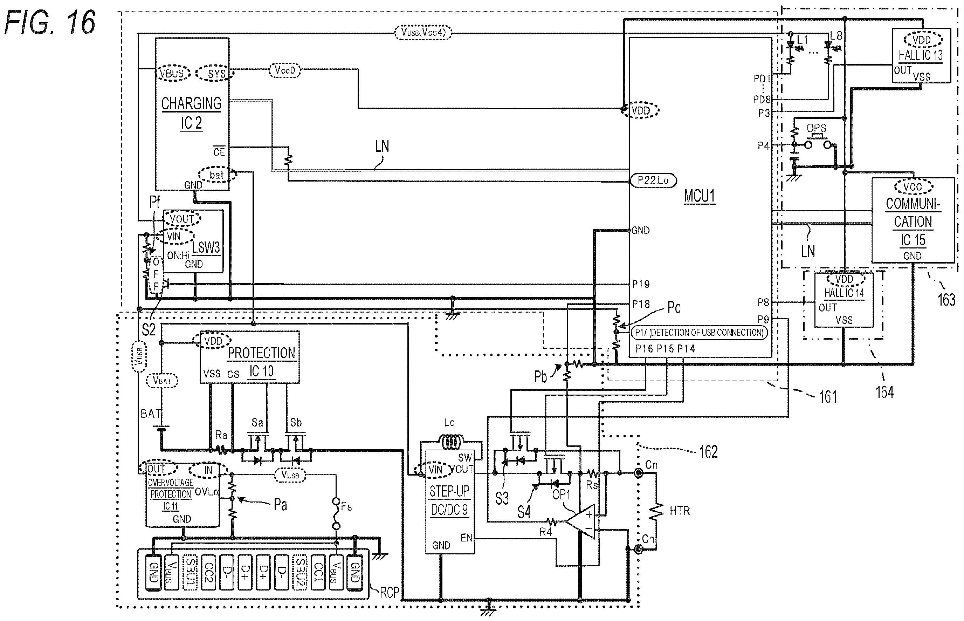

Hereinafter, operations of the electric circuit illustrated in Fig. 10 will be described with reference to Figs. 11 to 16. Fig. 11 is a diagram for illustrating an operation of the electric circuit in the sleep mode. Fig. 12 is a diagram for illustrating an operation of the electric circuit in the active mode. Fig. 13 is a diagram for illustrating an operation of the electric circuit in the heating initial setting mode. Fig. 14 is a diagram for illustrating an operation of the electric circuit at the time of heating the heater HTR in the heating mode. Fig. 15 is a diagram for illustrating an operation of the electric circuit at the time of detecting the temperature of the heater HTR in the heating mode. Fig. 16 is a diagram for illustrating an operation of the electric circuit in the charging mode. In each of Figs. 11 to 16, terminals surrounded by a broken ellipse, among the terminals of the electronic components formed into chips, indicate terminals to which the power supply voltage V_{BAT}, the USB voltage V_{USB}, the system power supply voltage, and the like are input or output.

In any operation mode, the power supply voltage V_{BAT} is input to the power supply terminal VDD of the protection IC 10, the input terminal VIN of the step-up DC/DC converter 9, and the charging terminal bat of the charging IC 2.

### <Sleep Mode: Fig. 11>

The MCU 1 enables the V_{BAT} power path function of the charging IC 2 and disables the OTG function and the charging function. The USB voltage Vusa is not input to the input terminal VBUS of the charging IC 2, whereby the V_{BAT} power path function of the charging IC 2 is enabled. Since a signal for enabling the OTG function from the communication line LN is not output from the MCU 1 to the charging IC 2, the OTG function is disabled. Therefore, the charging IC 2 generates the system power supply voltage VccO from the power supply voltage V_{BAT} input to the charging terminal bat, and outputs the system power supply voltage VccO from the output terminal SYS. The system power supply voltage VccO output from the output terminal SYS is input to the power supply terminal VDD of the MCU 1, the power supply terminal VDD of the Hall IC 13, the power supply terminal VCC of the communication IC 15, and the power supply terminal VDD of the Hall IC 14. The system power supply voltage VccO is set to be lower than the USB voltage V_{USB} input from the external power supply to the power supply input terminal V_{BUS} at the time of charging.

As described above, since the OTG function of the charging IC 2 is stopped in the sleep mode, the supply of power to the LEDs L1 to L8 is stopped.

### <Active Mode: Fig. 12>

In a case where it is detected that the signal input to the terminal P8 becomes a high level and the slider 119 is opened from the state under the sleep mode in Fig. 11, the MCU 1 activates the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: Fig. 13>

In a case where the signal input to the terminal P4 becomes a low level (the operation switch OPS is pressed) from the state in Fig. 12, the MCU 1 performs various settings necessary for heating, and then inputs a high-level enable signal from the terminal P14 to the enable terminal EN of the step-up DC/DC converter 9. Accordingly, the step-up DC/DC converter 9 outputs, from the output terminal VOUT, the drive voltage V_{bst} obtained by stepping up the power supply voltage V_{BAT}. The drive voltage V_{bst} is supplied to the switch S3 and the switch S4. In this state, the switch S3 and the switch S4 are turned off. Thereafter, the process proceeds to the heating mode.

### <Heater Heating in Heating Mode: Fig. 14>

In the state of Fig. 13, the MCU 1 starts switching control of the switch S3 connected to the terminal P16 and switching control of the switch S4 connected to the terminal P15. The switching control may be automatically started when the heating initial setting mode described above is completed, or may be started by further pressing the operation switch OPS. Specifically, the MCU 1 performs, as illustrated in Fig. 14, heating control in which the switch S3 is turned on, the switch S4 is turned off, the drive voltage V_{bst} is supplied to the heater HTR, and the heater HTR is heated for generating aerosol, and performs, as illustrated in Fig. 15, temperature detection control in which the switch S3 is turned off, the switch S4 is turned on, and the temperature of the heater HTR is detected.

### <Heater Temperature Detection in Heating Mode: Fig. 15>

As illustrated in Fig. 15, during the temperature detection control, the drive voltage V_{bst} is input to the positive power supply terminal of the operational amplifier OP1 and is input to the voltage divider circuit Pb. The voltage divided by the voltage divider circuit Pb is input to the terminal P18 of the MCU 1. The MCU 1 acquires a voltage of the positive power supply terminal of the operational amplifier OP1 during the temperature detection control based on the voltage input to the terminal P18.

In addition, during the temperature detection control, the drive voltage V_{bst} is supplied to the series circuit of the resistor Rs and the heater HTR. Further, a voltage Vₕₑₐₜ obtained by dividing the drive voltage V_{bst} by the resistor Rs and the heater HTR is input to the non-inverting input terminal of the operational amplifier OP1. The operational amplifier OP1 amplifies a difference between the voltage input to the inverting input terminal and the voltage Vₕₑₐₜ input to the non-inverting input terminal and outputs the amplified difference.

An output signal of the operational amplifier OP1 is input to the terminal P9 of the MCU 1. The MCU 1 acquires the temperature of the heater HTR based on the signal input to the terminal P9, the voltage of the positive power supply terminal of the operational amplifier OP1 acquired based on the input voltage of the terminal P18, and a known electric resistance value of the resistor Rs.

### <Charging Mode: Fig. 16>

Fig. 16 illustrates a case where a USB connection is established in the sleep mode. In a case where the USB connection is established, the USB voltage V_{USB} is input to the input terminal VIN of the LSW 3 via the overvoltage protection IC 11. The USB voltage V_{USB} is also supplied to the voltage divider circuit Pf connected to the input terminal VIN of the LSW 3. Since the bipolar transistor S2 is turned on immediately after the USB connection is established, the signal input to the control terminal ON of the LSW 3 remains at a low level. The USB voltage V_{USB} is also supplied to the voltage divider circuit Pc connected to the terminal P17 of the MCU 1, and a voltage divided by the voltage divider circuit Pc is input to the terminal P17. The MCU 1 detects that the USB connection is established based on the voltage input to the terminal P17. The voltage divider circuit Pc is configured to set the voltage input to the terminal P17 to be equal to or lower than the system power supply voltage VccO input to the power supply terminal VDD of the MCU 1.

When the MCU 1 detects that the USB connection is established, the MCU 1 turns off the bipolar transistor S2 connected to the terminal P19. When a low-level signal is input to a gate terminal of the bipolar transistor S2, the USB voltage V_{USB} divided by the voltage divider circuit Pf is input to the control terminal ON of the LSW 3. Accordingly, a high-level signal is input to the control terminal ON of the LSW 3, and the LSW 3 outputs the USB voltage V_{USB} from the output terminal VOUT. The USB voltage V_{USB} output from the LSW 3 is input to the input terminal VBUS of the charging IC 2. In addition, the USB voltage V_{USB} output from the LSW 3 is supplied to the LEDs L1 to L8 as the system power supply voltage Vcc4.

When the MCU 1 detects that the USB connection is established, the MCU 1 further outputs a low-level enable signal from the terminal P22 to the charge enable terminal CE( ) of the charging IC 2. Accordingly, the charging IC 2 enables the charging function of the power supply BAT and starts charging the power supply BAT by the USB voltage V_{USB} input to the input terminal VBUS. In this case, the MCU 1 does not heat the heater HTR for generating aerosol while keeping the switch S3 and the switch S4 OFF. In other words, in a case where it is detected that the USB connection is established based on the voltage input to the terminal P17, the MCU 1 prohibits the supply of the power from the power supply BAT to the heater connector Cn. Accordingly, power consumption from the power supply BAT during charging can be avoided.

### <Receptacle>

As illustrated in Figs 10 to 17, the receptacle RCP includes a plurality of pins (terminals) electrically connected to pins of the inserted plug. Specifically, the receptacle RCP includes a pair of GND pins ("GND" in the drawing, hereinafter also referred to as a GND pin pair), a pair of V_{BUS} pins ("V_{BUS}" in the drawing, hereinafter also referred to as a V_{BUS} pin pair), a CC1 pin ("CC1" in the drawing), a CC2 pin ("CC2" in the drawing), a pair of D- pins ("D-" in the drawing, hereinafter also referred to as a D- pin pair), a pair of D+ pins ("D+" in the drawing, hereinafter also referred to as a D+ pin pair), a SBU1 pin ("SBU1" in the drawing), and a SBU2 pin ("SBU2" in the drawing). It should be noted that in the present embodiment, only main pins among the pins included in the receptacle RCP are described. A role of the pins will be described later.

### <Protection Component for Receptacle>

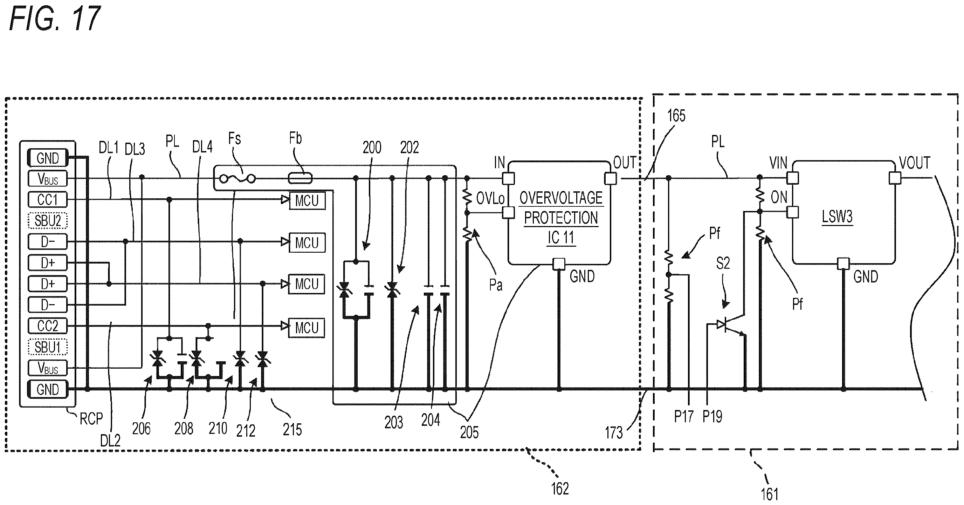

Fig. 17 is a diagram illustrating a power supply line PL extending from the receptacle RCP, data lines DL1 to DL4, and a protection component for the receptacle RCP. The protection component is a concept including a protection element (element component) and a protection IC (integrated circuit).

The GND pin pair of the receptacle RCP is grounded by a ground line. The V_{BUS} pin pair of the receptacle RCP receives input of power, to the inhaler 100, from the plug of the external power supply inserted into the receptacle RCP. For example, in a case where a plug is inserted into the receptacle RCP, predetermined USB bus power is supplied from the inserted plug to the inhaler 100 via the V_{BUS} pin pair. In addition, power in accordance with USB power delivery (USB PD) may be supplied, to the inhaler 100, from the plug of the external power supply inserted into the receptacle RCP. Since a voltage applied between the V_{BUS} pin pair of the receptacle RCP and the GND pin pair of the receptacle RCP is used for the charging of the power supply BAT and the operation of the inhaler 100, the V_{BUS} pin pair of the receptacle RCP functions as a power supply terminal. Therefore, a line connected to the V_{BUS} pin pair of the receptacle RCP is referred to as the power supply line PL.

The V_{BUS} pin pair is connected to an IN pin of the overvoltage protection IC 11 via the power supply line PL. The power supply line PL is further connected to a VIN pin of the LSW3 from an OUT pin of the overvoltage protection IC 11 via the flexible wiring board 165. A plurality of protection components are provided in the power supply line PL between the V_{BUS} pin pair and the overvoltage protection IC 11. Specifically, in the power supply line PL, the fuse Fs and a ferrite bead Fb are disposed between the V_{BUS} pin pair and the overvoltage protection IC 11 in this order from a V_{BUS} pin pair side. Further, the power supply line PL is connected to the ground line via an electro magnet aerosol generating device interference (EMI) removing filter 200, an electro stat aerosol generating device discharge (ESD) suppressor 202, and capacitors 203 and 204 on an overvoltage protection IC 11 side with respect to the ferrite bead Fb. The EMI removing filter 200 is mainly used to eliminate (remove) electromagnetic interference. The ESD suppressor 202 is mainly used to eliminate (remove) electrostatic discharge and surge. Hereinafter, the overvoltage protection IC 11, the fuse Fs, the ferrite bead Fb, the EMI removing filter 200, the ESD suppressor 202, and the capacitors 203 and 204 provided in the power supply line PL may be referred to as power supply line protection components 205.

The fuse Fs is an ungrounded element that cuts off a circuit when a large current equal to or greater than a rated current flows through the power supply line PL. The ungrounded element is an element of which both ends are not directly connected to the ground line. The fuse Fs may be a power fuse that detects a large current equal to or greater than a rated current from power, or may be a thermal fuse that detects a large current equal to or greater than a rated current from temperature. The ferrite bead Fb is a type of an inductor and is an ungrounded element that converts noise into heat in a predetermined band. A winding-type inductor may be used instead of the ferrite bead Fb.

The ESD suppressor 202 is an element having two terminals (electrodes) and having a property that a resistance value rapidly decreases in a case where a high voltage is applied between the terminals. The ESD suppressor 202 is a ground element having one end connected to the power supply line PL and the other end connected to the ground line. The ground element is an element having any end directly connected to the ground line. Therefore, for example, even when static electricity occurs in the V_{BUS} pin pair by rubbing at the time of inserting the plug into the receptacle RCP, the static electricity can be released to the ground line via the ESD suppressor 202 to protect the overvoltage protection IC 11.

The capacitors CD1 and CD2 smooth a ripple component (pulsating component) included in the input voltage by using a charging action and a discharging action of the capacitors, and stabilize the output voltage. Each of the capacitors CD1 and CD2 is a ground element having one end connected to the power supply line PL and the other end connected to the ground line. Therefore, even when noise or surge occurs in the V_{BUS} pin pair, the overvoltage protection IC 11 can be protected by the capacitors CD1 and CD2 from the noise or surge.

The EMI removing filter 200 is a ground element in which one end of a parallel circuit in which an ESD suppressor and a capacitor are connected in parallel is connected to the power supply line PL and the other end thereof is connected to the ground line. Therefore, for example, even when noise occurs which may cause an electromagnetic failure in the V_{BUS} pin pair by rubbing at the time of inserting a plug into the receptacle RCP, the noise can be released to the ground line via the EMI removing filter or can be kept in the capacitor to protect the overvoltage protection IC 11.

Of the MCU-mounted board 161 on which the MCU 1 and the charging IC 2 are disposed and the receptacle-mounted board 162 on which the receptacle RCP is disposed, the power supply line protection components 205 are disposed only on the receptacle-mounted board 162. Accordingly, since noise or surge is sufficiently removed, by the power supply line protection components 205, from the power supplied from the external power supply before reaching the MCU-mounted board 161, the MCU-mounted board 161 and the MCU 1 and the charging IC 2 disposed on the MCU-mounted board 161 can be protected. A specific disposition position of the power supply line protection components 205 will be described later.

In the present embodiment, the overvoltage protection IC 11, the fuse Fs, the ferrite bead Fb, the EMI removing filter 200, the ESD suppressor 202, and the capacitors 203 and 204 are exemplified as the power supply line protection components 205, but the type and the number of power supply line protection components can be optionally set. The power supply line protection components 205 preferably include both a ground element which is an element connected to the ground line and an ungrounded element which is not connected to the ground line. By disposing both the ground terminal and the unground terminal on the power supply line PL through which a large current flows, thick protection can be implemented.

In addition, the arrangement order of the power supply line protection components can also be optionally set. As in the present embodiment, by disposing the V_{BUS} pin pair, the ungrounded element (fuse Fs and ferrite bead Fb), the ground element (EMI removing filter 200, ESD suppressor 202, and capacitors 203 and 204), and the input terminal VBUS of the charging IC 2 in this order in the power supply line PL, noise or the like released to the ground to which other electronic components are connected can be reduced by the ungrounded element in advance, and thus the inhaler 100 stably operates.

In addition, one of the power supply line protection components 205 may be disposed on the MCU-mounted board 161, but the number of the power supply line protection components 205 disposed on the receptacle-mounted board 162 is preferably larger than the number of the power supply line protection components 205 disposed on the MCU-mounted board 161. Accordingly, the MCU-mounted board 161 and the charging IC 2 disposed on the MCU-mounted board 161 can also be protected.

The CC1 pin and the CC2 pin of the receptacle RCP are configuration channel pins, and are pins used to detect a vertical orientation of the plug inserted into the receptacle RCP. That is, the CC1 pin and the CC2 pin have a property as a data terminal.

The D- pin pair and the D+ pin pair of the receptacle RCP are pins for data transfer with the external power supply via the plug of the external power supply inserted into the receptacle RCP. That is, the D- pin and the D+ pin have a property as data terminals.

The CC1 pin, the CC2 pin, the D- pin pair, and the D+ pin pair of the receptacle RCP are connected to the MCU 1 via the data lines DL1 to DL4, respectively. Each of the data lines DL1 to DL4 is provided with a protection component. These protection components preferably include only one of the ungrounded element and the ground element, and more preferably includes only the ground element. By reducing the number of protection elements in the data lines DL1 to DL4 through which a small current flows, it is possible to stabilize the operation of the inhaler 100 while preventing an increase in cost and size thereof. In particular, by providing a ground element for releasing noise or the like to the ground in the data lines DL1 to DL4, protection can be effectively implemented with a small number of protection elements.

Specifically, in the present embodiment, one end of an EMI removing filter 206 is connected to the data line DL1 of the CC1 pin, one end of an EMI removing filter 208 is connected to the data line DL2 of the CC2 pin, one end of an ESD suppressor 210 is connected to the data line DL3 of the D- pin pair, one end of an ESD suppressor 212 is connected to the data line DL4 of the D+ pin pair, and the other ends of the EMI removing filters 206 and 208 and the ESD suppressors 210 and 212 are connected to the ground line. Therefore, for example, even when static electricity or noise occurs in these pins by rubbing at the time of inserting the plug into the receptacle RCP, the static electricity or noise can be released to the ground line via the EMI removing filter 206 or 208 or the ESD suppressor 210 or 212. Accordingly, it is possible to protect the MCU 1 and to prevent an erroneous operation of the MCU 1. Hereinafter, the EMI removing filters 206 and 208 and the ESD suppressors 210 and 212 provided in the data lines DL1 to L4 may be referred to as data line protection components 215.

Of the MCU-mounted board 161 and the receptacle-mounted board 162, the data line protection components 215 are disposed only on the receptacle-mounted board 162. Accordingly, since noise is sufficiently removed, by the data line protection components 215, from the power supplied from the external power supply before reaching the MCU-mounted board 161, the MCU-mounted board 161 and the MCU 1 disposed on the MCU-mounted board 161 can be protected.

In addition, one of the data line protection components 215 may be disposed on the MCU-mounted board 161, but the number of the data line protection components 215 disposed on the receptacle-mounted board 162 is preferably larger than the number of the data line protection components 215 disposed on the MCU-mounted board 161. Accordingly, the MCU-mounted board 161 and the charging IC 2 disposed on the MCU-mounted board 161 can also be protected.

According to the present embodiment, of the MCU-mounted board 161 and the receptacle-mounted board 162, the power supply line protection components 205 and the data line protection components 215 are disposed only on the receptacle-mounted board 162. Therefore, since noise or surge is sufficiently removed, by the power supply line protection components 205 and the data line protection components 215, from the power supplied from the external power supply before reaching the MCU-mounted board 161, the MCU-mounted board 161 and the charging IC 2 disposed on the MCU-mounted board 161 can be protected.

In the present embodiment, the EMI removing filters 206 and 208 and the ESD suppressors 210 and 212 are exemplified as the data line protection components 215, but the type and the number of data line protection components can be optionally set. In order to more appropriately protect the data lines DL1 to L4, electronic components other than the EMI removing filters 206 and 208 and the ESD suppressors 210 and 212 may be used for the data line protection components 215.

The data line protection component 215 may include the same protection element as the power supply line protection component 205. By using the protection element common to the power supply line PL and the data lines DL1 to DL4, the procurement cost of the protection element can be reduced, and the cost of the inhaler 100 can be reduced. On the other hand, the data line protection component 215 may not include the same protection element as the power supply line protection component 205. Since the protection elements suitable for the power supply line PL and the data lines DL1 to DL4 can be connected, the operation of the inhaler 100 can be more stabilized.

In the present embodiment, as the power supply line protection component 205, seven components, that is, the overvoltage protection IC 11, the fuse Fs, the ferrite bead Fb, the EMI removing filter 200, the ESD suppressor 202, and the capacitors 203 and 204 are provided, and as the data line protection component 215, four components, that is, the EMI removing filters 206 and 208 as well as the ESD suppressor 210 and 212 are provided. As described above, the number and the type of the protection components constituting the power supply line protection components 205 and the number and the type of the protection components constituting the data line protection components 215 are not limited thereto, but the number of the power supply line protection components 205 is preferably larger than that of the data line protection components 215. By disposing more protection elements in a line to which a larger current is supplied, it is possible to stabilize the operation of the inhaler 100 while preventing an increase in cost and size thereof.

### <Detailed Description of Board>

Here, disposition of the ICs and the elements disposed on the MCU-mounted board 161 and the receptacle-mounted board 162 will be described.

Fig. 18 is a diagram illustrating the main surface 162a of the receptacle-mounted board 162. On the main surface 162a of the receptacle-mounted board 162 extending in the up-down direction, the heater connector Cn is disposed at an upper side thereof, the receptacle RCP is disposed at a lower end portion thereof, and the reactor Lc of the step-up DC/DC converter 9 is disposed between the heater connector Cn and the receptacle RCP. Between the receptacle RCP and the reactor Lc and in the vicinity of the receptacle RCP, the EMI removing filter 208 disposed in the data line DL2 of the CC2 pin, the ESD suppressor 210 disposed in the data line DL3 of the D- pin pair, and the ESD suppressor 212 disposed in the data line DL4 of the D+ pin pair, among the data line protection components 215, are disposed. Since the data line protection components 215 are disposed on the main surface 162a of the receptacle-mounted board 162, the board area can be effectively utilized, and an increase in the size of the receptacle-mounted board 162 can be prevented. Accordingly, the cost and the size of the inhaler 100 can be reduced.

In addition, in the vicinity of the receptacle RCP, a battery connector 222 on the positive electrode side (hereinafter, referred to as a positive-electrode-side battery connector 222) is disposed on a right side and an opening portion 176 for fixing the spacer 173 is disposed on a left side so as to sandwich the data line protection components 215 in the left-right direction. Further, a battery connector 224 on the negative electrode side (hereinafter, referred to as a negative-electrode-side battery connector 224) and a power supply temperature detecting connector 234 connected to the thermistor T1 constituting the power supply temperature sensor are disposed on a left side of the reactor Lc of the step-up DC/DC converter 9, and the switch S4 for detecting the temperature of the heater HTR is disposed at a side opposite to the negative-electrode-side battery connector 224 in the left-right direction. A positive-electrode-side power supply bus bar 236 (see Figs. 7 and 8) extending from the positive electrode terminal of the power supply BAT is connected to the positive-electrode-side battery connector 222, and a negative-electrode-side power supply bus bar 238 (see Figs. 7 and 8) extending from the negative electrode terminal of the power supply BAT is connected to the negative-electrode-side battery connector 224.

The opening portion 176 of the receptacle-mounted board 162 for fixing the spacer 173 is provided at a position close to the receptacle RCP disposed at a lower end portion, in other words, on a lower end portion side rather than an upper end portion with respect to the center. Although noise caused by the current may be generated near a path through which power supplied from the external power supply passes, the board area of the receptacle-mounted board 162 can be effectively utilized by providing, near the path, the spacer 173 that is not affected by the noise.

Further, the positive-electrode-side battery connector 222 that electrically connects the power supply BAT and the receptacle-mounted board 162 is provided at a position close to the receptacle RCP disposed at a lower end portion, in other words, on a lower end portion side rather than an upper end portion with respect to the center. The positive-electrode-side battery connector 222, which is a conductor, is not a little affected by noise, but since a value of the current passing through the positive-electrode-side battery connector 222 is large, the influence of noise is small, and therefore, by providing the positive-electrode-side battery connector 222 near this path, the board area of the receptacle RCP can be effectively utilized. With these considerations, an increase in the size of the receptacle-mounted board 162 can be prevented, and thus the cost and the size of the inhaler 100 can be reduced.

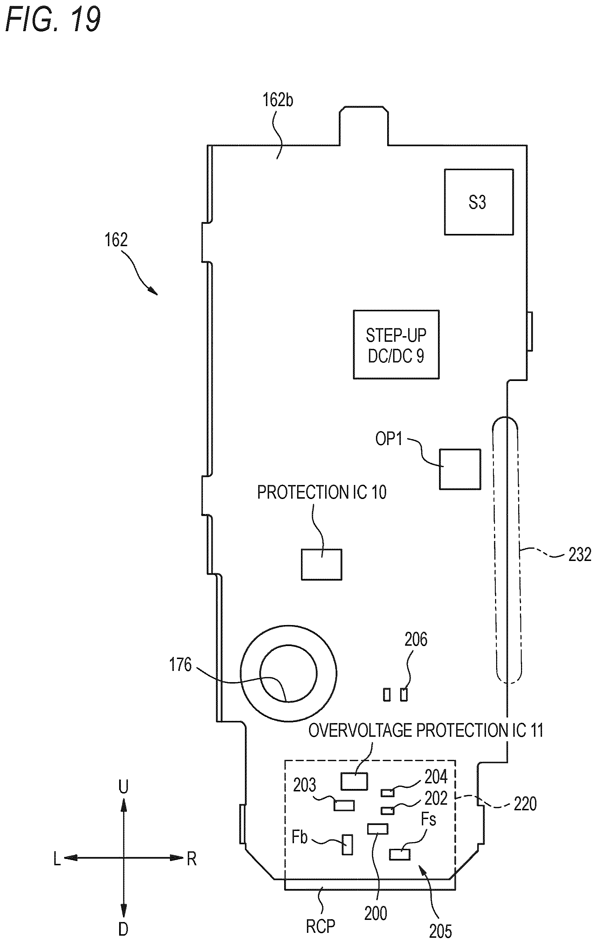

Fig. 19 is a diagram illustrating the secondary surface 162b of the receptacle-mounted board 162. On the secondary surface 162b of the receptacle-mounted board 162, the power supply line protection components 205 are disposed below the opening portion 176. Specifically, the overvoltage protection IC 11, the fuse Fs, the ferrite bead Fb, the EMI removing filter 200, the ESD suppressor 202, and the capacitors 203 and 204, which constitute the power supply line protection components 205, are disposed at a lower end portion of the secondary surface 162b of the receptacle-mounted board 162. By disposing the power supply line protection components 205 on the secondary surface 162b opposite to the main surface 162a on which the receptacle RCP is disposed in this way, the board area can be effectively utilized as compared with a case where the receptacle RCP and the power supply line protection components 205 are disposed on the same surface, and an increase in the size of the receptacle-mounted board 162 can be prevented. Accordingly, the cost and the size of the inhaler 100 can be reduced.

The overvoltage protection IC 11, the fuse Fs, the ferrite bead Fb, the EMI removing filter 200, the ESD suppressor 202, and the capacitors 203 and 204 are disposed at a position overlapping with the receptacle RCP when viewed from a direction (front-rear direction) orthogonal to the element disposition surface of the receptacle-mounted board 162, that is, in a receptacle projection region 220 which is a portion in which the receptacle RCP is projected in the front-rear direction. Therefore, a distance between the V_{BUS} pin pair of the receptacle RCP and the power supply line protection component 205 can be shortened to the maximum, and the influence of the power before being protected by the power supply line protection component 205 on other electronic components disposed on the receptacle-mounted board 162 can be reduced. Accordingly, the durability of the inhaler 100 can be improved, and the operation thereof can be stabilized. It is unnecessary to dispose all of the power supply line protection components 205 in the receptacle projection region 220, and at least a part thereof may be disposed in the receptacle projection region 220.

In addition, the EMI removing filter 206 constituting the data line protection component 215 is disposed on a right side of the opening portion 176, and the protection IC 10, the operational amplifier OP1, the step-up DC/DC converter 9, and the switch S3 for aerosol generating are disposed on an upper side thereof.

As described above, the data line protection components 215 (EMI removing filter 208, ESD suppressor 210, and ESD suppressor 212) excluding the EMI removing filter 206 is disposed on the main surface 162a of the receptacle-mounted board 162. While the power supply line protection components 205 are disposed on the secondary surface 162b of the receptacle-mounted board 162, a large number of data line protection components 215 are disposed on the main surface 162a, and by changing the mounting surface, the board area can be effectively utilized. Accordingly, an increase in the size of the receptacle-mounted board 162 can be prevented, and the cost and the size of the inhaler 100 can be reduced. All of the data line protection components 215 including the EMI removing filter 206 may be collectively disposed on the main surface 162a of the receptacle-mounted board 162.

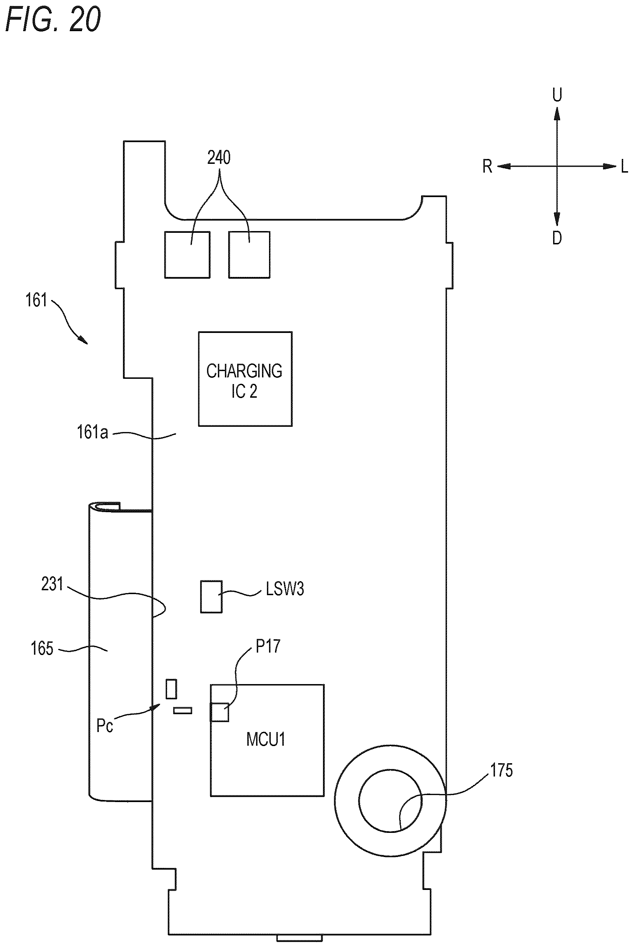

Fig. 20 is a diagram illustrating the main surface 161a of the MCU-mounted board 161. On the main surface 161a of the MCU-mounted board 161 extending in the up-down direction, the charging IC 2 is disposed on an upper side thereof, the MCU 1 is disposed on a lower side thereof, and the LSW 3 is disposed between the charging IC 2 and the MCU 1. A heater temperature detecting connector 240 to which the thermistor T3 constituting the heater temperature sensor is connected via a conductive wire is disposed on a further upper side of the charging IC 2. The opening portion 175 for fixing the spacer 173 is disposed at the obliquely lower left of the MCU 1. In addition, on the main surface 161a of the MCU-mounted board 161, the voltage divider circuit Pc which is a series circuit of two resistors is disposed between the MCU 1 and a right edge portion of the MCU-mounted board 161.

By disposing the MCU 1 and the charging IC 2 on the MCU-mounted board 161 with respect to the receptacle-mounted board 162 on which the receptacle RCP is disposed, the MCU 1 and the charging IC 2 are separated from the receptacle RCP, and thus are less likely to be affected by static electricity or the like that may enter from the receptacle RCP. Accordingly, the operation of the inhaler 100 can be further stabilized.

In addition, the LSW 3 capable of opening and closing the power supply line PL and provided between the power supply line protection component 205 and the input terminal VBUS of the charging IC 2 is disposed on the MCU-mounted board 161. Therefore, the power supplied from the external power supply from which noise or the like is removed by the power supply line protection component 205 is prevented, by the LSW 3, from being further suddenly supplied to the charging IC 2. Accordingly, an inrush current or a short-circuit current is prevented from being input to the charging IC 2, and thus the charging IC 2 can be further protected.

As described above, in a case where the signal input to the control terminal ON via the bipolar transistor S2 connected to the terminal P19 of the MCU 1 becomes a high level, the LSW 3 supplies power to the charging IC 2. In other words, the LSW 3 is not automatically turned on and is turned on only after receiving a command from the MCU 1. By interposing the control of the MCU 1 in the LSW 3, the erroneous operation of the LSW 3 can be prevented, and thus the charging IC 2 can be further protected.

On the other hand, the MCU 1 controls the supply of the power from the power supply BAT to the heater connector Cn based on the input of the voltage supplied from the power supply input terminal V_{BUS} of the receptacle RCP to the terminal P17. Specifically, in a case where the voltage supplied from the power supply input terminal V_{BUS} is input to the terminal P17, the MCU 1 prohibits the supply of power from the power supply BAT to the heater connector Cn. Therefore, control based on the detection of the external power supply can be executed by the MCU 1 that is protected from the power supplied from the external power supply. Accordingly, the charging control can be more reliably executed, and thus the performance of the inhaler 100 is improved. In addition, power consumption from the power supply BAT during charging can be avoided.

In addition, power supplied from the external power supply from which noise and the like is removed by the power supply line protection component 205 is input to the voltage divider circuit Pc. Accordingly, the voltage divider circuit Pc is less likely to be damaged, the control by the MCU 1 can be more reliably executed, and thus the performance of the inhaler 100 is improved. The voltage divider circuit Pc prevents a voltage higher than the system power supply voltage VccO from being input to the MCU 1, and causes the inhaler 100 to stably operate.

The two resistors of the voltage divider circuit Pc are disposed between the MCU 1 and the right edge portion, which is an edge of the MCU-mounted board 161 closest to the MCU 1. Specifically, the two resistors of the voltage divider circuit Pc are disposed between the right edge portion of the MCU-mounted board 161 and the terminal P17 of the MCU 1. Both of the two resistors of the voltage divider circuit Pc are not necessarily disposed between the MCU 1 and the right edge portion, which is an edge of the MCU-mounted board 161, and at least one may be disposed. Accordingly, at least a part of the voltage divider circuit Pc serves as a barrier against the noise entering from the right edge portion of the MCU-mounted board 161, whereby the MCU 1 is less likely to be damaged or erroneously operated, and thus the inhaler 100 stably operates.

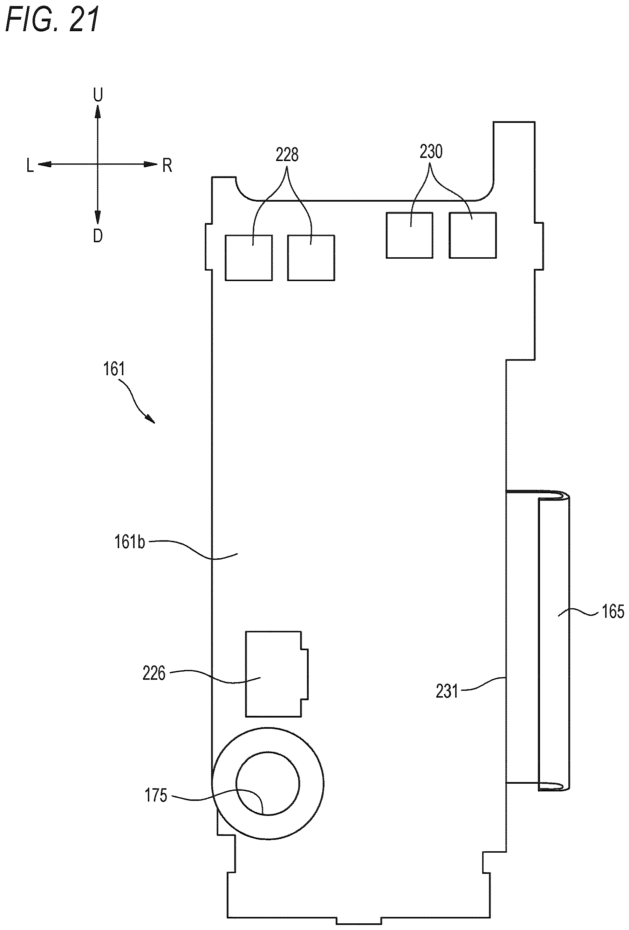

Fig. 21 is a diagram illustrating the secondary surface 161b of the MCU-mounted board 161. On the secondary surface 161b of the MCU-mounted board 161, a motor connector 226 to which the vibration motor M is connected via a conductive wire is disposed at an upper side of the opening portion 175, and a case temperature detecting connector 228 to which the thermistor T4 constituting the case temperature sensor is connected via a conductive wire and an intake detecting connector 230 to which the thermistor T2 constituting the intake sensor is connected via a conductive wire are disposed at an upper side thereof.

The flexible wiring board 165 electrically connecting the MCU-mounted board 161 and the receptacle-mounted board 162 connects FPC connection portions 231 and 232 of the MCU-mounted board 161 and the receptacle-mounted board 162. The FPC connection portions 231 and 232 are located at right end portions of the MCU-mounted board 161 and the receptacle-mounted board 162, respectively, and at positions reaching the vicinity of the opening portions 175 and 176 downward from a substantially central portion in the up-down direction.

As shown in Fig. 20, on the MCU-mounted board 161, the LSW 3 is disposed closer to the FPC connection portion 231 than the charging IC 2. That is, the LSW 3 is provided at a position close to a part where the power supplied from the external power supply is input to the MCU-mounted board 161. Accordingly, it is possible to reduce the influence of the noise generated when the inrush current, the short-circuit current, or the like is reduced by the LSW 3 on other elements and ICs disposed on the MCU-mounted board 161, and thus the MCU-mounted board 161 can be further protected. The LSW 3 is preferably disposed closer to the FPC connection portion 231 than any IC disposed on the MCU-mounted board 161.

As shown in Fig. 18, the FPC connection portion 232 of the receptacle-mounted board 162 is provided at a position close to the receptacle RCP disposed at a lower end portion, in other words, on a lower end portion side rather than an upper end portion with respect to the center. Accordingly, the power supplied from the external power supply does not pass through the entire receptacle-mounted board 162, and it is possible to reduce the influence of the noise generated by the current on other elements and ICs disposed on the receptacle-mounted board 162.

Although various embodiments have been described above with reference to the drawings, it is needless to say that the present invention is not limited to these examples. It is apparent to those skilled in the art that various changes and modifications may be conceived within the scope described in the claims, and it is understood that the changes and the modifications naturally fall within the technical scope of the present invention. In addition, the components described in the above embodiments may be optionally combined without departing from the spirit of the invention.

In the present description, at least the following matters are described. Corresponding components and the like in the above-mentioned embodiment are shown in parentheses, but the present invention is not limited thereto.
(1) A power supply unit for an aerosol generating device (non-combustion inhaler 100), including:
   a power supply (power supply BAT);
   a heater connector (heater connector Cn) connected to a heater (heater HTR) configured to heat an aerosol source by consuming power supplied from the power supply;
   a charging IC (charging IC 2) including an input terminal (input terminal VBUS) and a charging terminal (charging terminal bat) connected to the power supply, and configured to convert power input to the input terminal and to output power which is converted from the charging terminal;
   a receptacle (receptacle RCP) electrically connectable to an external power supply and including a power supply terminal (power supply input terminal V_{BUS});
   a power supply line (power supply line PL) configured to connect the power supply terminal and the input terminal;
   a first protection component (power supply line protection component 205) provided in the power supply line;
   a first board (MCU-mounted board 161); and
   a second board (receptacle-mounted board 162) separate from the first board, in which:
      the charging IC is disposed on the first board;
      the receptacle is disposed on the second board; and
      the first protection component is disposed only on the second board of the first board and the second board.

   According to (1), since noise or surge is sufficiently removed, by the first protection component, from the power supplied from the external power supply before reaching the first board on which the charging IC is disposed, the first board and the charging IC disposed on the first board can be protected.
(2) The power supply unit for an aerosol generating device according to (1), in which:
   the second board has a main surface (main surface 162a) and a secondary surface (secondary surface 162b) which is a back surface of the main surface;
   the receptacle is disposed on the main surface; and
   the first protection component is disposed on the secondary surface.

   According to (2), the board area can be effectively utilized as compared with a case where the receptacle and the first protection component are disposed on the same surface, and thus an increase in the size of the second board can be prevented. Accordingly, the cost and the size of the power supply unit for an aerosol generating device can be reduced.
(3) The power supply unit for an aerosol generating device according to (2), in which
   at least a part of the first protection component is disposed in a region (receptacle projection region 220) in which the receptacle is projected from a direction orthogonal to the second board.
   According to (3), a distance between the power supply terminal of the receptacle and the first protection component can be shortened to the minimum, and it is possible to reduce the influence of the power before being protected by the first protection component on other electronic components disposed on the second board. That is, it is possible to reduce the influence on not only the first board and the electronic components disposed on the first board but also the other electronic components disposed on the second board. Accordingly, the durability of the power supply unit for an aerosol generating device can be improved, and the operation thereof can be stabilized.
(4) The power supply unit for an aerosol generating device according to (2) or (3), in which:
   the receptacle includes a data terminal (CC1 pin, CC2 pin, D- pin, D+ pin);
   the power supply unit further includes:
      a controller (MCU 1) configured to control supply of power from the power supply to the heater connector;
      a data line (data lines DL1 to DL4) configured to connect the data terminal and the controller; and
      a second protection component (data line protection component 215) provided in the data line; and the second protection component is disposed on the main surface.

   According to (4), since noise is sufficiently removed, by the second protection component, from the power supplied from the external power supply before reaching the controller, the controller can be protected. Further, since the second protection component is disposed on the main surface of the second board, the board area can be effectively utilized. Accordingly, an increase in the size of the second board can be prevented, and thus the cost and the size of the power supply unit for an aerosol generating device can be reduced.
(5) The power supply unit for an aerosol generating device according to (4), in which
   the controller is disposed on the first board.
   According to (5), since noise or surge is sufficiently removed, by the second protection component, from the power supplied from the external power supply before reaching the first board on which the controller is disposed, the first board and the controller can be further protected.
(6) The power supply unit for an aerosol generating device according to any one of (1) to (5), further including:
   a switch (LSW 3) configured to open and close the power supply line and provided between the first protection component and the input terminal, in which
   the switch is provided on the first board.

   According to (6), the power supplied from the external power supply from which noise or the like is removed by the first protection component is prevented, by the switch, from being further suddenly supplied to the charging IC. Accordingly, an inrush current or a short-circuit current is prevented from being input to the charging IC, and thus the charging IC can be further protected.
(7) The power supply unit for an aerosol generating device according to (6), further including:
   a controller (MCU 1) configured to control supply of power from the power supply to the heater connector, in which the controller is configured to control opening and closing of the switch.
   According to (7), the switch is not automatically turned on and is turned on only after receiving a command from the controller. By interposing the controller in ON of the switch, the erroneous operation of the switch can be prevented, and thus the charging IC can be further protected.
(8) The power supply unit for an aerosol generating device according to (6) or (7), in which:
   the power supply line includes a connection line (flexible wiring board 165) configured to connect the first board and the second board; and
   the switch is disposed closer to a first connection part (FPC connection portion 231), which is a part where the connection line and the first board are connected, than the charging IC.

   According to (8), the switch is provided at a position close to a part where the power supplied from the external power supply to the first board is input to the first board. Accordingly, it is possible to reduce the influence, on the charging IC, of the noise generated when the inrush current, the short-circuit current, or the like is reduced by the switch, and thus the first board can be further protected.
(9) The power supply unit for an aerosol generating device according to (8), in which
   the switch is provided at a position closer to the first connection part than any IC disposed on the first board.
   According to (9), the switch is provided at a position close to a part where the power supplied from the external power supply to the first board is input to the first board. Accordingly, it is possible to reduce the influence, on all of ICs disposed on the first board, of the noise generated when the inrush current, the short-circuit current, or the like is reduced by the switch, and thus the first board can be further protected.
(10) The power supply unit for an aerosol generating device according to (8) or (9), in which:
   the second board extends in a predetermined direction (up-down direction);
   the receptacle is provided at one end (lower end portion) in the predetermined direction; and
   a second connection part (FPC connection portion 232), which is a part where the connection line and the second board are connected, is provided at a position closer to the receptacle than an other end (upper end portion) in the predetermined direction.

   According to (10), the power supplied from the external power supply does not pass through the entire second board, and it is possible to reduce the influence of noise generated by the current on other elements and ICs disposed on the second board. Accordingly, the second board can also be protected.
(11) The power supply unit for an aerosol generating device according to (10), further including:
   a case (case 110) configured to accommodate the power supply, the charging IC, the power supply line, the first protection component, the first board, the second board, and the switch; and
   a first connector (spacer 173) configured to fix positions of the first board and the second board inside the case, and to mechanically connect the first board and the second board, in which
   a part (opening portion 176) where the first connector and the second board are connected is closer to the one end in the predetermined direction than the other end in the predetermined direction.

   According to (11), noise caused by the current may be generated near the path through which the power supplied from the external power supply passes. Therefore, by providing, near this path, the first connector that is not affected by noise, the board area of the second board can be effectively utilized. Accordingly, an increase in the size of the second board can be prevented, and thus the cost and the size of the power supply unit for an aerosol generating device can be reduced. In addition, since the positions of the first board and the second board inside the case can be fixed by the first connector, the generating of a short-circuit current between the first board and the second board due to contact therebetween is prevented.
(12) The power supply unit for an aerosol generating device according to (10) or (11), further including:
   a second connector (positive-electrode-side power supply bus bar 236) configured to electrically connect the power supply and the second board, in which
   a part (battery connector 222) where the second connector and the second board are connected is closer to the one end in the predetermined direction than the other end in the predetermined direction.

   According to (12), the second connector, which is a conductor, is not a little affected by noise, but since the value of the current passing through the second connector is large, the influence of noise is small, and therefore, by providing the second connector near this path, the board area of the second board can be effectively utilized. Accordingly, an increase in the size of the second board can be prevented, and thus the cost and the size of the power supply unit for an aerosol generating device can be reduced.
(13) A power supply unit for an aerosol generating device (non-combustion inhaler 100), including:
   a power supply (power supply BAT);
   a heater connector (heater connector Cn) connected to a heater (heater HTR) configured to heat an aerosol source by consuming power supplied from the power supply;
   a charging IC (charging IC 2) including an input terminal (input terminal VBUS) and a charging terminal (charging terminal bat) connected to the power supply, and configured to convert power input to the input terminal and to output power which is converted from the charging terminal;
   a receptacle (receptacle RCP) electrically connectable to an external power supply and including a power supply terminal (power supply input terminal V_{BUS});
   a power supply line (power supply line PL) configured to connect the power supply terminal and the input terminal;
   a first protection component (power supply line protection component 205) provided in the power supply line;
   a first board (MCU-mounted board 161); and
   a second board (receptacle-mounted board 162) separate from the first board, in which:
      the charging IC is disposed on the first board;
      the receptacle is disposed on the second board; and
      the number of the first protection component disposed on the second board is larger than the number of the first protection component disposed on the first board.

According to (13), since noise or surge is sufficiently removed, by the first protection component, from the power supplied from the external power supply before reaching the first board on which the charging IC is disposed, the first board and the charging IC disposed on the first board can be protected.

The present application is based on the Japanese patent application (No. 2021-079874) filed on May 10, 2021, and contents thereof are incorporated herein by reference.

### REFERENCE SIGNS LIST

1: MCU (controller)
2: charging IC
100: non-combustion inhaler (power supply unit for aerosol generating device)
110: case
161: MCU-mounted board (first board)
162: receptacle-mounted board (second board)
162a: main surface
162b: secondary surface
165: flexible wiring board (connection line)
173: spacer (first connector)
176: opening portion (part where first connector and second board are connected)
205: power supply line protection component (first protection component)
215: data line protection component (second protection component)
220: receptacle projection region
222: positive-electrode-side battery connector (part where second connector and second board are connected)
231: FPC connection portion (first connection part)
232: FPC connection portion (second connection part)
236: positive-electrode-side power supply bus bar (second connector) CC1 pin (data terminal) CC2 pin (data terminal) D- pin (data terminal) D+ pin (data terminal)
DL1: data line
DL2: data line
DL3: data line
DL4: data line
BAT: power supply
HTR: heater
Cn: heater connector
VBUS: input terminal
bat: charging terminal LSW 3 (switch)
RCP: receptacle
PL: power supply line
V_{BUS}: power supply input terminal (power supply terminal)

## Claims

1. A power supply unit for an aerosol generating device, comprising:
a power supply;
a heater connector connected to a heater configured to heat an aerosol source by consuming power supplied from the power supply;
a charging IC including an input terminal and a charging terminal connected to the power supply, and configured to convert power input to the input terminal and to output power which is converted from the charging terminal;
a receptacle electrically connectable to an external power supply and including a power supply terminal;
a power supply line configured to connect the power supply terminal and the input terminal;
a first protection component provided in the power supply line;
a first board; and
a second board separate from the first board, wherein:
the charging IC is disposed on the first board;
the receptacle is disposed on the second board; and
the first protection component is disposed only on the second board of the first board and the second board.

2. The power supply unit for an aerosol generating device according to claim 1, wherein:
the second board has a main surface and a secondary surface which is a back surface of the main surface;
the receptacle is disposed on the main surface; and
the first protection component is disposed on the secondary surface.

3. The power supply unit for an aerosol generating device according to claim 2, wherein
at least a part of the first protection component is disposed in a region in which the receptacle is projected from a direction orthogonal to the second board.

4. The power supply unit for an aerosol generating device according to claim 2 or 3, wherein:
the receptacle includes a data terminal;
the power supply unit further comprises:
a controller configured to control supply of power from the power supply to the heater connector;
a data line configured to connect the data terminal and the controller; and
a second protection component provided in the data line; and
the second protection component is disposed on the main surface.

5. The power supply unit for an aerosol generating device according to claim 4, wherein
the controller is disposed on the first board.

6. The power supply unit for an aerosol generating device according to any one of claims 1 to 5, further comprising:
a switch configured to open and close the power supply line and provided between the first protection component and the input terminal, wherein
the switch is provided on the first board.

7. The power supply unit for an aerosol generating device according to claim 6, further comprising:
a controller configured to control supply of power from the power supply to the heater connector, wherein
the controller is configured to control opening and closing of the switch.

8. The power supply unit for an aerosol generating device according to claim 6 or 7, wherein:
the power supply line includes a connection line configured to connect the first board and the second board; and
the switch is disposed closer to a first connection part, which is a part where the connection line and the first board are connected, than the charging IC.

9. The power supply unit for an aerosol generating device according to claim 8, wherein
the switch is provided at a position closer to the first connection part than any IC disposed on the first board.

10. The power supply unit for an aerosol generating device according to claim 8 or 9, wherein:
the second board extends in a predetermined direction;
the receptacle is provided at one end in the predetermined direction; and
a second connection part, which is a part where the connection line and the second board are connected, is provided at a position closer to the receptacle than an other end in the predetermined direction.

11. The power supply unit for an aerosol generating device according to claim 10, further comprising:
a case configured to accommodate the power supply, the charging IC, the power supply line, the first protection component, the first board, the second board, and the switch; and
a first connector configured to fix positions of the first board and the second board inside the case, and to mechanically connect the first board and the second board, wherein
a part where the first connector and the second board are connected is closer to the one end in the predetermined direction than the other end in the predetermined direction.

12. The power supply unit for an aerosol generating device according to claim 10 or 11, further comprising:
a second connector configured to electrically connect the power supply and the second board, wherein
a part where the second connector and the second board are connected is closer to the one end in the predetermined direction than the other end in the predetermined direction.

13. A power supply unit for an aerosol generating device, comprising:
a power supply;
a heater connector connected to a heater configured to heat an aerosol source by consuming power supplied from the power supply;
a charging IC including an input terminal and a charging terminal connected to the power supply, and configured to convert power input to the input terminal and to output power which is converted from the charging terminal;
a receptacle electrically connectable to an external power supply and including a power supply terminal;
a power supply line configured to connect the power supply terminal and the input terminal;
a first protection component provided in the power supply line;
a first board; and
a second board separate from the first board, wherein:
the charging IC is disposed on the first board;
the receptacle is disposed on the second board; and
the number of the first protection component disposed on the second board is larger than the number of the first protection component disposed on the first board.
